(19) Europäisches Patentamt / European Patent Office / Office européen des brevets

(11) EP 2 009 074 A1

(12) EUROPEAN PATENT APPLICATION
published in accordance with Art. 153(4) EPC

(43) Date of publication:
**31.12.2008 Bulletin 2009/01**

(21) Application number: **07739891.5**

(22) Date of filing: **27.03.2007**

(51) Int Cl.:
***C09K 3/00*** *(2006.01)* ***C08F 220/26*** *(2006.01)*
***C08F 290/06*** *(2006.01)* ***C08F 299/00*** *(2006.01)*
***C10M 101/02*** *(2006.01)* ***C10M 137/04*** *(2006.01)*
***C10M 137/08*** *(2006.01)* ***C10M 145/14*** *(2006.01)*
***C10M 169/04*** *(2006.01)* ***C10N 20/00*** *(2006.01)*
***C10N 20/02*** *(2006.01)* ***C10N 20/04*** *(2006.01)*
***C10N 30/02*** *(2006.01)* ***C10N 30/08*** *(2006.01)*
***C10N 40/04*** *(2006.01)* ***C10N 40/06*** *(2006.01)*
***C10N 40/08*** *(2006.01)* ***C10N 40/25*** *(2006.01)*

(86) International application number:
**PCT/JP2007/056453**

(87) International publication number:
**WO 2007/116759 (18.10.2007 Gazette 2007/42)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **28.03.2006 JP 2006089411**

(71) Applicant: **Sanyo Chemical Industries, Ltd.**
**Kyoto-shi,**
**Kyoto 605-0995 (JP)**

(72) Inventors:
- **YUKI, Tsuyoshi**
  **Kyoto-shi**
  **Kyoto 605-0995 (JP)**
- **HAMANO, Kazuki**
  **Kyoto-shi**
  **Kyoto 605-0995 (JP)**

(74) Representative: **Brehm, Hans-Peter et al**
**Hansmann & Vogeser**
**Patent- und Rechtsanwälte**
**Leutstettener Straße 13**
**D-82319 Starnberg (DE)**

# (54) VISCOSITY INDEX IMPROVER AND LUBRICANT COMPOSITION

(57) The present invention has its object to provide a viscosity index improver having excellent shearing stability, viscosity index improving ability, and low-temperature viscosity characteristics, a lubricant composition containing the viscosity index improver, and a monomer used for producing the viscosity index improver. The present invention relates to a viscosity index improver comprising a copolymer (A) containing a monomer (a) represented by the following formula (1) as a constituent monomer, a lubricant composition containing the viscosity index improver and a base oil, and a monomer composition containing the monomer (a).

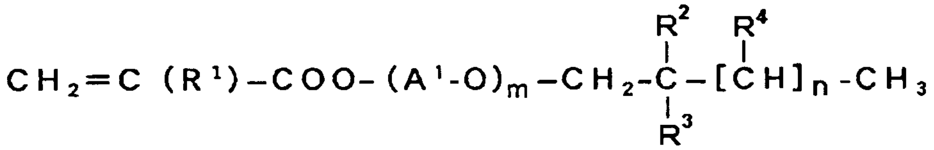

(1)

EP 2 009 074 A1

Fig. 1

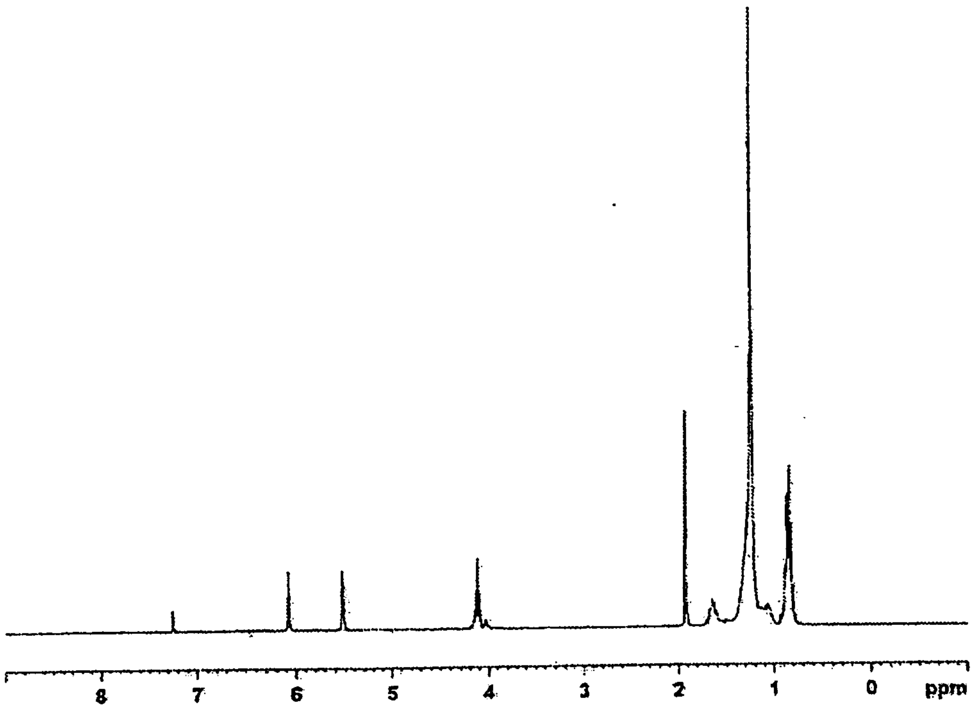

## Description

### TECHNICAL FIELD

The present invention relates to a viscosity index improver and a lubricant composition containing the same. More specifically, the present invention relates to a viscosity index improver having excellent low-temperature viscosity characteristics as well as having excellent shearing stability and viscosity index improving ability, a lubricant composition containing the same, and a specific monomer composition forming a copolymer contained in the viscosity index improver.

### BACKGROUND ART

With the recent increasing momentum toward global environmental protection, saving of fuel consumption of automobiles is much more demanded. As one approach to save the fuel consumption, there can be mentioned reduction in viscosity resistance by lowering viscosity of a lubricant. However, simply lowering of the viscosity may result in problems such as liquid leakage and seizing. Also, the demands for comfort performance of automobiles have become stricter, and among these, improvement in shift operability and low-temperature startup performance are demanded. In order to solve these problems, it is generally requested to increase the viscosity index of the lubricant, and various viscosity index improvers have been proposed. In particular, many viscosity index improvers containing a polymethacrylate copolymer are proposed (for example, Patent Documents 1 to 5) . Further, it is recently proposed that as a viscosity index improver having excellent sludge dispersibility, friction characteristics, low-temperature viscosity characteristics, and shearing stability, in particular, a polymethacrylate copolymer having a branched alkyl group, combination of such a copolymer and a phosphorus compound and so on have been proposed (Patent Documents 6, 7).

Patent Document 1: Japanese Kokai Publication Hei-7-48421
Patent Document 2: Japanese Kokai Publication Hei-7-62372
Patent Document 3: Japanese Patent Publication No. 2732187
Patent Document 4: Japanese Patent Publication No. 2941392
Patent Document 5: Japanese Kokai Publication 2002-302687
Patent Document 6: Japanese Kokai Publication 2004-124080
Patent Document 7: Japanese Kokai Publication 2005-187736

### SAMMARY OF THE INVENTION

However, conventional polymethacrylate viscosity index improvers have such a drawback that the low-temperature viscosity characteristics is poor (that is, exhibiting high viscosity at a low temperature, e.g., about -40°C), although the effect for a viscosity index is satisfactory.

As a result of intensive studies, the present inventors found that a copolymer containing a (meth)acrylate monomer having a specific branched structure as a constituent monomer has excellent shearing stability, viscosity index improving ability and low-temperature viscosity characteristics, and the present invention has been completed.

That is, the present invention includes the following first to fifth embodiments.

(First embodiment)

A first embodiment relates to a viscosity index improver containing a copolymer (A) which contains a monomer (a) represented by the formula (1) as a constituent monomer:

[Chem. 1]

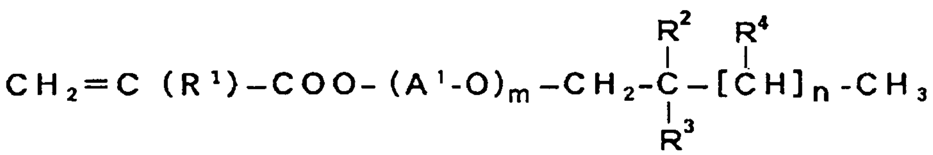

(1)

(wherein

$R^1$ is hydrogen atom or methyl group;
$R^2$ is hydrogen atom or a C1-C3 alkyl group;
$R^3$ is hydrogen atom or a C8-C40 alkyl group;
n atoms of $R^4$ each independently is hydrogen atom or a C1-C3 alkyl group;
the total number of carbon atoms in $-CH_2-C(R^2)(R^3)-[CH(R^4)]_n-CH_3$ is 14 to 80;
n is an integer of 4 to 36;
at least one of $R^2$ and n atoms of $R^4$ is a C1-C3 alkyl group;
$A^1$ is a C2-C4 alkylene group; and
m is 0 or an integer of 1 to 20).

(Second embodiment)

A second embodiment relates to a viscosity index improver composition comprising 10 to 90% by weight of the viscosity index improver and 10 to 90% by weight of a diluting solvent (D) based on the total amount of the viscosity index improver and the diluting solvent (D).

(Third embodiment)

A third embodiment relates to a lubricant composition containing the above viscosity index improver and a base oil, wherein the base oil has a kinetic viscosity at 100°C of 2 to 10 $mm^2/s$ and a flash point of 160°C or more, and the lubricant composition contains 0.1 to 30% by weight of the copolymer (A) based on the weight of the lubricant composition.

(Fourth embodiment)

A fourth embodiment relates to a monomer composition containing two or more kinds of monomers (a) represented by the formula (1) :
[Chem. 2]

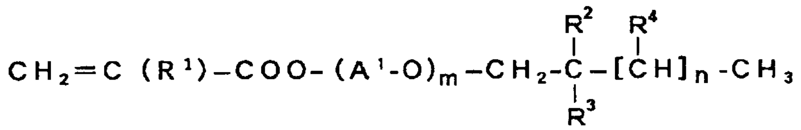 (1)

(wherein
$R^1$ is hydrogen atom or methyl group;
$R^2$ is hydrogen atom or a C1-C3 alkyl group;
$R^3$ is hydrogen atom or a C8-C40 alkyl group;
n atoms of $R^4$ each independently is hydrogen atom or a C1-C3 alkyl group;
the total number of carbon atoms in $-CH_2-C(R^2)(R^3)-[CH(R^4)]_n-CH_3$ is 14 to 80;
n is an integer of 4 to 36;
at least one of $R^2$ and n atoms of $R^4$ is a C1-C3 alkyl group;
$A^1$ is a C2-C4 alkylene group; and
m is 0 or an integer of 1 to 20).

(Fifth embodiment)

A fifth embodiment relates to a polymer having a weight average molecular weight of 5,000 to 2,000,000 obtained by polymerizing the above monomer composition.

DETAILED DESCRIPTION OF THE INVENTION

Hereinafter, the present invention will be explained more specifically.

(First embodiment)

The viscosity index improver, which is the first embodiment of the present invention, contains a copolymer (A) (hereinafter, also referred to simply as (A)). (A) contains a monomer (a) represented by the formula (1) (hereinafter, also referred to simply as (a)) as a constituent monomer.

[Chem. 3]

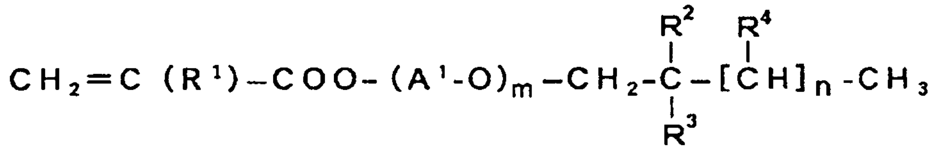

(1)

In the formula (1), $R^1$ is hydrogen atom or methyl group, and preferably methyl group. $R^2$ is hydrogen atom or a C1-C3 alkyl group, and is preferably hydrogen atom or methyl group. $R^3$ is hydrogen atom or a C8-C40 alkyl group, and preferably hydrogen atom, a $-CH_2CH(R^5)-[CH(R^6)]_k-CH_3$ group, and a C10-C18 straight-chain alkyl group. n atoms of $R^4$ each independently is hydrogen atom or a C1-C3 alkyl group, and at least one of $R^2$ and n atoms of $R^4$ is a C1-C3 alkyl group. In the $-CH_2CH(R^5)-[CH(R^6)]_k-CH_3$ group, $R^5$ is hydrogen atom or a C1-C3 alkyl group, k atoms of $R^6$ each independently is hydrogen atom or a C1-C3 alkyl group, and at least one of $R^5$ and k atoms of $R^6$ is a C1-C3 alkyl group. In the formula (1), the total number of carbon atoms in the $-CH_2-C(R^2)(R^3)-[CH(R^4)]_n-CH_3$ is 14 to 80. n and k are generally an integer of 4 to 36, and preferably 8 to 15 from the viewpoint of low-temperature viscosity characteristics.

Examples of the C1-C3 alkyl group include methyl group, ethyl group, n-propyl group and isopropyl group, and methyl group is preferred. From the viewpoint of low-temperature viscosity characteristics, it is preferred that at least one, preferably one to four, and more preferably one to three of $R^2$ and n atoms of $R^4$ is methyl group, and the remainder is hydrogen atom. Also from the viewpoint of low-temperature viscosity characteristics, it is preferred that at least one, preferably one to four, and more preferably one to three out of $R^5$ and k atoms of $R^6$ is methyl group, and the remainder is hydrogen atom. $A^1$ in the formula (1) is a C2-C4 alkylene group. Examples of $A^1$ include ethylene group, 1,2-propylene group, 1,3-propylene group, 1,2-butylene group and 1,4-butylene group. Among these, ethylene group and 1,2-propylene group are preferred. m is 0 or an integer of 1 to 20. From the viewpoint of solubility and low-temperature viscosity characteristics, m is preferably 0 or 1 to 10, more preferably 0 or 1 to 5, and particularly 0.

Among the monomers (a), preferred from the viewpoint of low-temperature viscosity characteristics is a monomer (a1) in which both of $R^2$ and $R^3$ in the formula (1) are hydrogen atom, and the total number of carbon atoms in the $-CH_2-C(R^2)(R^3)-[CH(R^4)]_n-CH_3$ is 14 to 40.

The monomer (a1) is represented by the formula (2):

[Chem. 4]

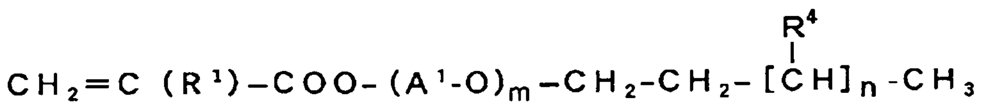

(2)

wherein, $R^1$ is hydrogen atom or methyl group;
n atoms of $R^4$ each independently is hydrogen atom or an alkyl group having 1 to 3 carbon atoms;
the total number of carbon atoms in the $-CH_2-CH_2-[CH(R^4)]_n-CH_3$ group is 14 to 40;
n is an integer of 4 to 36;
at least one of n atoms of $R^4$ is a C1-C3 alkyl group;
$A^1$ is a C2-C4 alkylene group; and
m is 0 or an integer of 1 to 20.

In the above (a1), from the viewpoint of low-temperature viscosity characteristics, the total number of carbon atoms in the $-CH_2-CH_2-[CH(R^4)]_n-CH_3$ group in the formula (2) is preferably 14 to 28, and more preferably 14 to 24.

Specific examples of the monomer (a1) are as follows. (1) Those in which one out of n atoms of $R^4$ is methyl group and the remainder is hydrogen atom:

(1-1) Those in which the total number of carbon atoms in the $-CH_2-CH_2-[CH(R^4)]_n-CH_3$ group is 14, and n=10: 3-methyltridecyl (meth)acrylate, 4-methyltridecyl (meth)acrylate, 5-methyltridecyl (meth)acrylate, 6-methyltridecyl (meth)acrylate, 7-methyltridecyl (meth)acrylate, 8-methyltridecyl (meth)acrylate, 9-methyltridecyl (meth)acrylate, 10-methyltridecyl (meth)acrylate, 11-methyltridecyl (meth)acrylate, 12-methyltridecyl (meth)acrylate and so on.

(1-2) Those in which the total number of carbon atoms in the $-CH_2-CH_2-[CH(R^4)]_n-CH_3$ group is 15, and n=11: 3-methyltetradecyl (meth)acrylate, 4-methyltetradecyl (meth) acrylate, 5-methyltetradecyl (meth) acrylate, 13-methyltetradecyl (meth)acrylate and so on.

(1-3) Those in which the total number of carbon atoms in the $-CH_2-CH_2-[CH(R^4)]_n-CH_3$ group is 16, and n=12: 3-methylpentadecyl (meth)acrylate, 4-methylpentadecyl (meth)acrylate, 5-methylpentadecyl (meth)acrylate, 14-methylpentadecyl (meth)acrylate and so on.

(1-4) Those in which the total number of carbon atoms in the $-CH_2-CH_2-[CH(R^4)]_n-CH_3$ group is 17, and n=13: 3-methylhexadecyl (meth)acrylate, 4-methylhexadecyl (meth)acrylate, 5-methylhexadecyl (meth)acrylate, 14-methylhexadecyl (meth)acrylate and so on.

(1-5) Those in which the total number of carbon atoms in the $-CH_2-CH_2-[CH(R^4)]_n-CH_3$ group is 18, and n=14: 3-methylheptadecyl (meth)acrylate, 4-methylheptadecyl (meth)acrylate, 5-methylheptadecyl (meth)acrylate, 14-methylheptadecyl (meth)acrylate and so on.

(1-6) Those in which the total number of carbon atoms in the $-CH_2-CH_2-[CH(R^4)]_n-CH_3$ group is 20, and n=16: 3-methylnonadecyl (meth)acrylate, 4-methylnonadecyl (meth)acrylate, 5-methylnonadecyl (meth)acrylate, 18-methylnonadecyl (meth)acrylate and so on.

(2) Those in which two out of n atoms of $R^4$ are methyl group and the remainder is hydrogen atom:

(2-1) Those in which the total number of carbon atoms in the $-CH_2-CH_2-[CH(R^4)]_n-CH_3$ group is 14, and n=9: 3,4-dimethyldodecyl (meth)acrylate, 4,5-dimethyldodecyl (meth)acrylate, 3,6-dimethyldodecyl (meth)acrylate, 3,10-dimethyldodecyl (meth)acrylate, 8,11-dimethyldodecyl (meth)acrylate and so on.

(2-2) Those in which the total number of carbon atoms in the $-CH_2-CH_2-[CH(R^4)]_n-CH_3$ group is 15, and n=10: 3,4-dimethyltridecyl (meth)acrylate, 4,5-dimethyltridecyl (meth)acrylate, 3,6-dimethyltridecyl (meth)acrylate, 3,10-dimethyltridecyl (meth)acrylate, 8,11-dimethyltridecyl (meth)acrylate and so on.

(2-3) Those in which the total number of carbon atoms in the- $CH_2-CH_2-[CH(R^4)]_n-CH_3$ group is 16, and n=11: 3,4-dimethyltetradecyl (meth)acrylate, 4,5-dimethyltetradecyl (meth)acrylate, 3,6-dimethyltetradecyl (meth)acrylate, 3,10-dimethyltetradecyl (meth)acrylate, 8,11-dimethyltetradecyl (meth)acrylate and so on.

(2-4) Those in which the total number of carbon atoms in the $-CH_2-CH_2-[CH(R^4)]_n-CH_3$ group is 17, and n=12: 3,4-dimethylpentadecyl (meth)acrylate, 4,5-dimethylpentadecyl (meth)acrylate, 3,6-dimethylpentadecyl (meth)acrylate, 3,10-dimethylpentadecyl (meth)acrylate, 8,11-dimethylpentadecyl (meth)acrylate and so on.

(2-5) Those in which the total number of carbon atoms in the $-CH_2-CH_2-[CH(R^4)]_n-CH_3$ group is 18, and n=13: 3,4-dimethylhexadecyl (meth)acrylate, 4,5-dimethylhexadecyl (meth)acrylate, 3,6-dimethylhexadecyl (meth)acrylate, 3,10-dimethylhexadecyl (meth)acrylate, 8,11-dimethylhexadecyl (meth)acrylate and so on.

(2-6) Those in which the total number of carbon atoms in the $-CH_2-CH_2-[CH(R^4)]_n-CH_3$ group is 20, and n=15: 3,4-dimethyloctadecyl (meth)acrylate, 4,5-dimethyloctadecyl (meth)acrylate, 3,6-dimethyloctadecyl (meth)acrylate, 3,10-dimethyloctadecyl (meth)acrylate, 8,11-dimethyloctadecyl (meth)acrylate and so on.

(3) Those in which three out of n atoms of $R^4$ are methyl group and the remainder is hydrogen atom:

(3-1) Those in which the total number of carbon atoms in the $-CH_2-CH_2-[CH(R^4)]_n-CH_3$ group is 14, and n=8: 3,4,5-trimethylundecyl (meth)acrylate, 4,5,6-trimethylundecyl (meth)acrylate, 3,6,9-trimethylundecyl (meth)acrylate, 3,5,10-trimethylundecyl (meth)acrylate, 8,9,10-trimethylundecyl (meth)acrylate and so on.

(3-2) Those in which the total number of carbon atoms in the $-CH_2-CH_2-[CH(R^4)]_n-CH_3$ group is 15, and n=9: 3,4,5-trimethyldodecyl (meth)acrylate, 4,5,6-trimethyldodecyl (meth)acrylate, 3,6,8-trimethyldodecyl (meth)acrylate, 9,10,11-trimethyldodecyl (meth)acrylate and so on.

(3-3) Those in which the total number of carbon atoms in the $-CH_2-CH_2-[CH(R^4)]_n-CH_3$ group is 16, and n=10: 3,4,5-trimethyltridecyl (meth)acrylate, 4,5,6-trimethyltridecyl (meth)acrylate, 3,6,8-trimethyltridecyl (meth)acrylate, 10,11,12-trimethyltridecyl (meth)acrylate and so on.

(3-4) Those in which the total number of carbon atoms in the $-CH_2-CH_2-$ $[CH(R^4)]_n-CH_3$ group is 17, and n=11: 3,4,5-trimethyltetradecyl (meth)acrylate, 4,5,6-trimethyltetradecyl (meth)acrylate, 3,6,8-trimethyltetradecyl (meth) acrylate, 11,12,13-trimethyltetradecyl (meth)acrylate and so on.

(3-5) Those in which the total number of carbon atoms in the $-CH_2-CH_2-[CH(R^4)]_n-CH_3$ group is 18, and n=12: 3,4,5-trimethylpentadecyl (meth)acrylate, 4,5,6-trimethylpentadecyl (meth)acrylate, 3,6,8-trimethylpentadecyl (meth)acrylate, 12,13,14-trimethylpentadecyl (meth)acrylate and so on.

(3-6) Those in which the total number of carbon atoms in the $-CH_2-CH_2-[CH(R^4)]_n-CH_3$ group is 20, and n=14: 3,4,5-trimethylheptadecyl (meth)acrylate, 4,5,6-trimethylheptadecyl (meth)acrylate, 3,6,8-trimethylheptadecyl (meth)acrylate, 12,13,14-trimethylheptadecyl (meth)acrylate and so on.

In the above monomer (a1), preferred from the viewpoint of improvement in viscosity index are monomers in which one to three out of n atoms of $R^4$ in the formula (2) is methyl group, and the remainder is hydrogen atom. From the viewpoint of low-temperature viscosity characteristics and improvement in viscosity index, monomers having 16 to 18, and particularly 16 and 17 of the total number of carbon atoms in the $-CH_2-CH_2-[CH(R^4)]_n-CH_3$ group in the formula (2) are preferred.

The monomer (a1) may be used singly or in combination of two or more kinds. Therefore, a copolymer containing different two or more kinds of monomers among the compounds represented by the formula (2), as its constituent monomers, may be obtained. Among these, from the viewpoint of low-temperature viscosity characteristics and improvement in viscosity index, preferred are copolymers containing two or more kinds of monomers as constituent monomers each having a different number of methyl groups in n atoms of $R^4$ in the formula (2), in which an average of one to three

per one molecule of the $R^4$s in the two or more kinds of monomers is methyl group and the remainder is hydrogen atom. Further, from the viewpoint of low-temperature viscosity characteristics and improvement in viscosity index, preferred are copolymers containing two or more kinds of monomers each having the different total number of carbon atoms in the $-CH_2-CH_2-[CH(R^4)]_n-CH_3$ group in the formula (2) as constituent monomers, in which the average total number of carbon atoms per one molecule of the $-CH_2-CH_2-[CH(R^4)]_n-CH_3$ in the two or more kinds of monomers is 16 to 18.

Preferably, the copolymer (A) in the present invention contains the monomer (a1) and a monomer (a2) represented by the formula (3) in which $R^2$ in the formula (1) is a C1-C3 alkyl group, $R^3$ is hydrogen atom, and the total number of carbon atoms in the $-CH_2-C(R^2)(R^3)-[CH(R^4)]_n-CH_3$ is 14 to 40, as constituent monomers, from the viewpoint of low-temperature viscosity characteristics.

[Chem. 5]

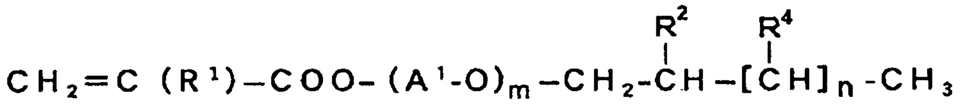 (3)

In the formula, $R^1$ is hydrogen atom or methyl group;
$R^2$ is a C1-C3 alkyl group;
n atoms of $R^4$ each independently is hydrogen atom or a C1-C3 alkyl group;
the total number of carbon atoms in $-CH_2-CH(R^2)-[CH(R^4)]_n-CH_3$ is 14 to 40;
n is an integer of 4 to 36;
$A^1$ is a C2-C4 alkylene group; and
m is 0 or an integer of 1 to 20.

In the monomer (a2), from the viewpoint of low-temperature viscosity characteristics, a preferred range of the total number of carbon atoms in the $-CH_2-CH(R^2)-[CH(R^4)]_n-CH_3$ is similar to that of the monomer (a1). In the monomer (a2), from the viewpoint of low-temperature viscosity characteristics, preferred are monomers in which one to three of n atoms of $R^4$ is methyl group and the remainder is hydrogen atom.

As the monomer (a2), there may be mentioned the following monomers. These may be used singly or in combination of two or more kinds.

(1) Those in which all of atoms of $R^4$ are hydrogen atom;
those in which the total number of carbon atoms of the $-CH_2-CH(R^2)-[CH(R^4)]_n-CH_3$ group is 14 to 20, and n=10 to 16;
2-methyltridecyl (meth)acrylate, 2-methyltetradecyl (meth)acrylate, 2-methylpentadecyl (meth)acrylate, 2-methylheptadecyl (meth)acrylate, 2-methyloctadecyl (meth)acrylate, 2-methylnonadecyl (meth)acrylate and so on.

(2) Those in which one of n atoms of $R^4$ is methyl group and the remainder is hydrogen atom;
those in which the total number of carbon atoms of the $-CH_2-CH(R^2)-[CH(R^4)]_n-CH_3$ group is 14 to 20, and n=10 to 16;
2,3-dimethyldodecyl (meth)acrylate, 2,4-dimethyldodecyl (meth)acrylate, 2,3-dimethyltetradecyl (meth)acrylate, 2,4-dimethyltetradecyl (meth)acrylate, 2,3-dimethylhexadecyl (meth)acrylate, 2,4-dimethylhexadecyl (meth)acrylate, 2,3-dimethyloctadecyl (meth)acrylate, 2,4-dimethyloctadecyl (meth)acrylate and so on.

In the case that the copolymer (A) contains both (a1) and (a2) as constituent units, a molar ratio (a1)/(a2) is preferably (70/30) to (90/10), and more preferably (75/25) to (85/15) from the viewpoint of low-temperature viscosity characteristics.

(a1), (a2) and a mixture thereof are generally synthesized from a saturated aliphatic alcohol or an alkylene oxide adduct thereof, and (meth) acrylic acid or a lower alkyl ester thereof. Therefore, as the saturated aliphatic alcohol used as materials of (a1) and (a2), alcohols having a group of $-CH_2CH_2-[CH(R^4)]_n-CH_3$ or $-CH_2-CH(R^2)-[CH(R^4)]_n-CH_3$ can be used.

As described above, the copolymer (A) preferably contains (a2) as well as (a1) as constituent monomers. In this case, since the mixture of (a1) and (a2) preferably has a molar ratio (a1)/(a2) ranging from (70/30) to (90/10) as described above, it is preferred to use, as a material, an alcohol mixture which allows synthesis of the mixture to be carried out at once (one pot manner). As such preferred alcohols, alcohols synthesized by oxo process of methylated olefin, for example, an alcohol mixture in which alcohol residues are the above $-CH_2CH_2-[CH(R^4)]_n-CH_3$ group and the $-CH_2-CH(R^2)-[CH(R^4)]_n-CH_3$ group (wherein, n is as defined above), the number of carbon atoms thereof is 16 and 17, and the average number of methyl groups in n atoms of $R^4$ is 1 to 2. Specifically, there may be mentioned the one commercially available under the name of "NEODOL 67" (trade name, available from Shell Chemicals).

Therefore, among the mixtures containing (a1) and (a2), particularly preferred is (meth)acrylate of "NEODOL 67". Alcohols having a vinyl polymer such as ethylene/propylene oligomer as a residue are not preferred because distribution of the number of carbon atoms is wide.

The copolymer (A) in the present invention may comprise a monomer (a3) represented by the formula (4), in which $R^3$ in the formula (1) is $-CH_2-CH(R^5)-[CH(R^6)]_k-CH_3$ as a constituent monomer.

[Chem. 6]

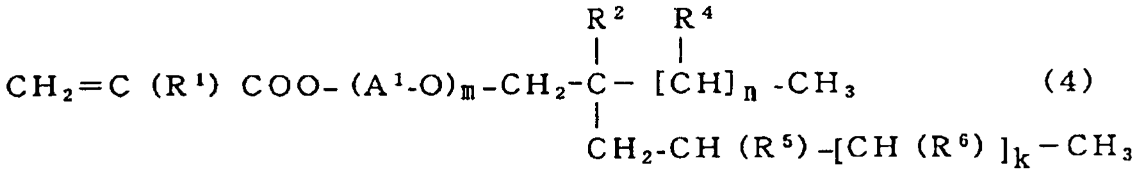

(4)

In the formula, $R^1$ is hydrogen atom or methyl group; in the formula (4), the total number of carbon atoms in the alkyl group moiety represented by the following formula (5) is 28 to 80;

[Chem. 7]

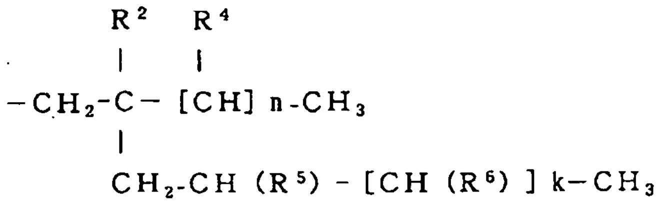

(5)

$R^2$, $R^4$, $R^5$ and $R^6$ are hydrogen atom or a C1-C3 alkyl group;
n atoms of $R^4$ and k atoms of $R^6$ each independently is hydrogen atom or a C1-C3 alkyl group;
at least one of n atoms of $R^4$ is a C1-C3 alkyl group;
at least one of k atoms of $R^6$ is a C1-C3 alkyl group;
n and k each is an integer of 4 to 36;
$A^1$ is a C2-C4 alkylene group; and
m is 0 or an integer of 1 to 20.

Preferred ranges of $R^2$, $R^4$, $R^5$, $R^6$, $A^1$, n, k and m are similar to those in the above formula (1).

From the viewpoint of low-temperature viscosity, the number of carbon atoms in the alkyl group moiety represented by the formula (5) is preferably 28 to 56, more preferably 28 to 48, still preferably 28 to 36, and particularly preferably 32 to 36.

Specific examples of (meth)acrylate (a3) represented by the formula (4) include the following, and mixtures thereof may also be used.

(1) Those in which both n atoms of $R^4$ and k atoms of $R^6$ have one methyl group, and the remainder is hydrogen atom:

those in which the total number of carbon atoms of the alkyl group represented by the formula (5) is 28, n=10, and k=10: 2-(1-methylundecyl)-5-methylpentadecyl (meth)acrylate, 2-(10-methylundecyl)-5-methylpentadecyl (meth) acrylate, 2-(1-methylundecyl)-14-methylpentadecyl (meth)acrylate, 2-(10-methylundecyl)-14-methylpentadecyl (meth)acrylate and so on.

Those in which the total number of carbon atoms of the alkyl group represented by the formula (5) is 32, n=12, and k=12: 2-(1-methyltridecyl)-5-methylheptadecyl (meth)acrylate, 2-(12-methyltridecyl)-5-methylheptadecyl (meth)acrylate, 2-(1-methyltridecyl)-16-methylheptadecyl (meth)acrylate, 2-(12-methyltridecyl)-16-methylheptadecyl (meth)acrylate and so on.

Those in which the total number of carbon atoms of the alkyl group represented by the formula (5) is 34, n=13, and k=13: 2-(1-methyltetradecyl)-5-methyloctadecyl (meth)acrylate, 2-(13-methyltetradecyl)-5-methyloctadecyl (meth) acrylate, 2-(1-methyltetradecyl)-17-methyloctadecyl (meth)acrylate, 2-(13-methyltetradecyl)-17-methyloctadecyl (meth)acrylate and so on.

(2) Those in which a total of three, that is one to two of n atoms of $R^4$ and one to two of k atoms of $R^6$, are methyl group, and the remainder is hydrogen atom:

those in which the total number of carbon atoms of the alkyl group represented by the formula (5) is 32, n=11, and k=12: 2-(1,5-dimethyldodecyl)-5-methylheptadecyl (meth)acrylate, 2-(4,12-dimethyldodecyl)-5-methylheptadecyl (meth)acrylate and so on.

Those in which the total number of carbon atoms of the alkyl group represented by the formula (5) is 34, n=12, and k=13: 2-(1,5-dimethyltridecyl)-5-methyloctadecyl (meth)acrylate, 2-(4,12-dimethyltridecyl)-17-methyloctadecyl (meth)acrylate and so on.

(3) Those in which a total of four, that is one to three of n atoms of $R^4$ and one to three of k atoms of $R^6$, are methyl group, and the remainder is hydrogen atom:

those in which the total number of carbon atoms of the alkyl group represented by the formula (5) is 32, n=11, and k=11: 2-(1,5-dimethyldodecyl)-5,10-dimethylhexadecyl (meth)acrylate, 2-(5,11-dimethyldodecyl)-5 10-dimethylhexadecyl (meth)acrylate, 2-(1,5-dimethyldodecyl)-7,15-dimethylhexadecyl (meth)acrylate, 2-(5,11-dimethyldodecyl)-7,15-dimethylhexadecyl (meth)acrylate and so on.

Those in which the total number of carbon atoms of the alkyl group represented by the formula (5) is 34, n=12, and k=12: 2-(1,5-dimethyltridecyl)-5,10-dimethylheptadecyl (meth)acrylate, 2-(5,12-dimethyltridecyl)-5,10-dimethylheptadecyl (meth)acrylate, 2-(1,5-dimethyltridecyl)-7,16-dimethylheptadecyl (meth)acrylate, 2-(5,11-dimethyltridecyl)-7,16-dimethylheptadecyl (meth)acrylate and so on.

Among the monomers (a3), preferred from the viewpoint of viscosity index are (meth)acrylates in which one to four of n atoms of $R^4$ and k atoms of $R^6$ in the formula (5) are methyl group, and the remainder is hydrogen atom. The monomer (a3) may be used singly or in combination of two or more kinds. Therefore, the copolymer (A) may be obtained by using a monomer composition containing different two or more kinds of monomers (a3). Among others, a monomer composition of (meth) acrylates in which one to four of n atoms of $R^4$ and k atoms of $R^6$ in the formula (5) are methyl group by an average in the composition, and the remainder is hydrogen atom is preferred. More preferred is a monomer composition containing two or more kinds of monomers of alkyl (meth)acrylate in which the total number of carbon atoms of alkyl group represented by the formula (5) is 28 to 36, and particularly 32 to 34, and m is 0.

The monomer (a3) is generally synthesized from a saturated aliphatic alcohol represented by the following formula (10), or an alkylene oxide adduct thereof, and (meth)acrylic acid or a lower alkyl ester thereof.

[Chem. 8]

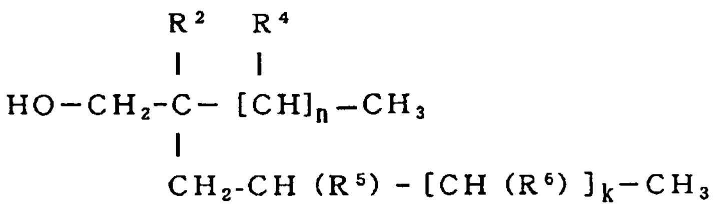

(1 0)

In the formula, $R^2$, $R^4$, $R^5$, $R^6$, n and k are similar to those in the formula (5).

As the alcohols represented by the formula (10), there can be mentioned alcohols obtainable by dimerizing alcohols that can be used as materials for the above-described monomers (a1) and (a2) by the Guerbet reaction.

As such dimerized alcohols, there can be mentioned, for example, alcohols obtained by dimerizing oxo alcohols of methyl branched olefin by the Guerbet reaction, alcohols obtained by condensing oxo alcohol and oxo alcohol of methyl branched olefin by the Guerbet reaction, and alkylene oxide adducts of these alcohols.

Among these, alcohols obtained by dimerizing oxo alcohols of methyl branched olefin by the Guerbet reaction are preferred from the viewpoint of low-temperature viscosity characteristics.

Among oxo alcohols of methyl branched olefin, the above-described "NEODOL 67" (trade name, available from Shell Chemicals) is particularly preferred.

Examples of other preferred oxo alcohols include "NEODOL 23" and "NEODOL 45" (trade name, available from Shell Chemical).

Among the monomers (a3), most preferred from the viewpoint of low-temperature viscosity characteristics are

(meth) acrylates of alcohol obtained by dimerizing "NEODOL" (for example, "NEODOL 67", "NEODOL 23", "NEODOL 45" and so on) by the Guerbet reaction.

The copolymer (A) in the present invention may contain a monomer (a4) as a constituent monomer, in which $R^3$ in the formula (1) is a straight-chain alkyl group having 8 to 40 carbon atoms, preferably having 10 to 18 carbon atoms from the viewpoint of low-temperature viscosity characteristics. The monomer (a4) is represented by the formula (11).

[Chem. 9]

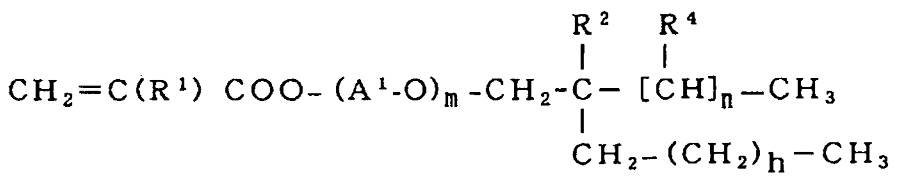

(11)

In the formula (11), $R^1$, $R^2$, $R^4$, $A^1$, m and n are similar to those in the formula (1), and preferences thereof are also similar thereto. Further, h is 6 to 38, and preferably 8 to 16.

Examples of the C8-C40 straight-chain alkyl group include an n-octyl group, an n-nonyl group, an n-decyl group, an n-dodecyl group, an n-tridecyl group, an n-tetradecyl group, an n-hexadecyl group, an n-octadecyl group, an n-eicosyl group and so on.

Examples of the monomer (a4) are as follows.

(1) Those in which the straight-chain alkyl group has 12 carbon atoms; 2-dodecyl-3-methylpentadecyl (meth)acrylate, 2-dodecyl-4-methylpentadecyl (meth)acrylate, 2-dodecyl-5-methylpentadecyl (meth) acrylate, 2-dodecyl-6-methylpentadecyl (meth)acrylate, 2-dodecyl-7-methylpentadecyl (meth)acrylate, 2-dodecyl-8-methylpentadecyl (meth) acrylate, 2-dodecyl-9-methylpentadecyl (meth)acrylate, 2-dodecyl-10-methylpentadecyl (meth)acrylate, 2-dodecyl-11-methylpentadecyl (meth)acrylate, 2-dodecyl-12-methylpentadecyl (meth)acrylate, 2-dodecyl-13-methylpentadecyl (meth)acrylate, 2-dodecyl-14-methylpentadecyl (meth)acrylate and so on.

(2) Those in which the straight-chain alkyl group has 14 carbon atoms; 2-tetradecyl-3-methylpentadecyl (meth) acrylate, 2-tetradecyl-4-methylpentadecyl (meth)acrylate, 2-tetradecyl-5-methylpentadecyl (meth)acrylate, 2-tetradecyl-6-methylpentadecyl (meth)acrylate, 2-tetradecyl-7-methylpentadecyl (meth)acrylate, 2-tetradecyl-8-methylpentadecyl (meth)acrylate, 2-tetradecyl-9-methylpentadecyl (meth)acrylate, 2-tetradecyl-10-methylpentadecyl (meth)acrylate, 2-tetradecyl-11-methylpentadecyl (meth)acrylate, 2-tetradecyl-12-methylpentadecyl (meth)acrylate, 2-tetradecyl-13-methylpentadecyl (meth)acrylate, 2-tetradecyl-14-methylpentadecyl (meth)acrylate and so on.

(3) Those in which the straight-chain alkyl group has 16 carbon atoms; 2-hexadecyl-3-methylpentadecyl (meth) acrylate and so on.

(4) Those in which the straight-chain alkyl group has 18 carbon atoms; 2-octadecyl-3-methyleicosyl (meth)acrylate and so on.

Likewise the monomer (a3), the monomer (a4) is synthesized from an alcohol or an alkylene oxide adduct thereof, and (meth)acrylic acid or a lower alkyl ester thereof.
As to the alcohol, it may be obtained by the Guerbet reaction likewise the case of (a3). As the alcohols that can be used in the Guerbet reaction, there can be mentioned alcohols that can be used as materials for the monomers (a1) and (a2) described above, and alcohols having a C8-C40 straight-chain alkyl group. Among these alcohols, preferred are the alcohols obtained by condensing an oxo alcohol of methyl branched olefin and natural alcohols by the Guerbet reaction.

If necessary, the copolymer (A) may further contains an alkyl (meth)acrylate (b1) having a C1-C4 alkyl group; at least one kind of monomer (b2) selected from (meth)acrylates having a C8-C17 alkyl group other than (a) and alkyl (meth)acrylates having a C18-C24 straight-chain alkyl group; and at least one kind of monomer selected from other monomers (c) to (m), as constituent monomers, in addition to the monomer (a) (hereinafter, also denoted by the monomer (a) or simply (a) as a generic designation for (a1), (a2), (a3) and (a4)).

(b1) includes methyl (meth)acrylate, ethyl (meth) acrylate, n-and iso-propyl (meth) acrylates, and n-, iso-, sec-, and tert-butyl (meth)acrylates.

(b2) includes C8-C17 straight-chain alkyl (meth)acrylates and alkyl (meth)acrylates having a C8-C17 branched alkyl group (b21) other than (a), and alkyl (meth)acrylates having a C18-C24 straight-chain alkyl group (b22).

(b21) includes C8-C17 straight-chain alkyl (meth)acrylates (b211) and C8-C17 branched alkyl (meth)acrylates (b212) other than (a).

Examples of (b211) include n-dodecyl methacrylate, n-tetradecyl methacrylate, n-hexadecyl methacrylate, n-octadecyl methacrylate, n-octyl methacrylate, n-nonyl methacrylate, n-decyl methacrylate, n-tridecyl methacrylate, n-pentadecyl methacrylate and the like, and further acrylates corresponding to these, for example, n-dodecyl acrylate and the like, (meth)acrylate of Ziegler alcohol and so on.

Examples of (b212) include isooctyl (meth)acrylate, 2-ethylhexyl (meth)acrylate, isononyl (meth)acrylate, isodecyl (meth)acrylate, 2-methylundecyl (meth) acrylate, and 2-methyldodecyl (meth)acrylate.

As the (b21), there may further be mentioned (meth) acrylates of mixtures of a C8-C17 straight-chain alcohol and a C8-C17 branched alcohol (b213) other than (a).

As a mixture of (b211) and (b212), there can be mentioned, for example, (meth)acrylate of oxo alcohol, and as the oxo alcohol, there can be mentioned "NEODOL 23" and "NEODOL 45" (available from Shell Chemicals), and "OXOCOL 1213", "OXOCOL 1415" (available from Nissan Chemical Industries, Ltd.) and so on.

Among (b21), C12-C17 (more preferably, C12-C15) alkyl (meth)acrylates, and particularly, C12-C17 (more preferably C12-C15) straight-chain alkyl (meth)acrylates are preferred from the viewpoint of viscosity index and low-temperature viscosity characteristics.

(b22) includes C18-C24 straight-chain alkyl (meth)acrylates, for example, n-octadecyl acrylate, n-nonadecyl (meth)acrylate, n-eicosyl methacrylate, n-eicosyl acrylate, n-docosyl (meth)acrylate and n-tetracosyl (meth)acrylate. Among (b22), preferred from the viewpoint of viscosity index and low-temperature viscosity characteristics is n-octadecyl (meth)acrylate.

As monomers (c) to (m), there may be mentioned the following monomers.
(c) Hydroxyl group-, amide group- or carboxyl group-containing monomers:

(c1) Hydroxyl group-containing monomers:
(c11) Hydroxyl group-containing (meth)acrylic acid esters C2-C4 hydroxyalkyl (meth)acrylates [for example, 2-hydroxyethyl (meth)acrylate, 2-hydroxypropyl (meth) acrylate and so on] and (meth) acrylates of polyol having 3 to 8 hydroxyl groups (such as glycerin mono- and di-(meth)acrylate, trimethylol propane mono- and di-(meth) acrylates and sucrose (meth)acrylate);
(c12) C2-C12 alkenols:
vinyl alcohols (formed by hydrolysis of vinyl acetate unit) and C3-C12 alkenols (such as (meth)allyl alcohol, (iso) propenyl alcohol, 1-butene-3-ol, 1-butene-4-ol and 1-octenol);
(c13) Hydroxyl group-containing alkenyl ethers having a C3-C12 alkenyl group:
hydroxyalkyl (having 1 to 6 carbon atoms) alkenyl (having 3 to 12 carbon atoms) ethers (for example, 2-hydroxyethyl propenyl ether, and C3-C12 alkenyl ethers of polyol (such as trimethylol propane mono-and di-(meth)allyl ethers and sucrose (meth)allyl ether));
(c14) Hydroxyl group-containing aromatic monomers:
o-, m- or p-hydroxystyrene and so on;
(c15) (Poly)oxyalkylene ethers of monomers (c11) to (c14).
Among (c1), preferred is (c11), in particular, C2-C4 hydroxyalkyl (meth)acrylates, and particularly preferred are hydroxylethyl (meth)acrylate, particularly hydroxyethyl methacrylate.

(c2) Amide group-containing monomers:

(c21) (Meth)acrylamides:
unsubstituted and alkyl-substituted acrylamides (for example, acrylamide, methacrylamide, N-mono-alkyl (having 1 to 4 carbon atoms)- and N,N-di-alkyl (having 1 to 4 carbon atoms)-substituted (meth)acrylamide), hydroxyalkyl substituted acryl amides (for example, N-mono-hydroxyalkyl (having 1 to 4 carbon atoms) and N,N-di-hydroxyalkyl (having 1 to 4 carbon atoms) substituted (meth)acrylamide), and N-vinylcarboxylic acid amides (for example, N-vinylformamide, N-vinyl acetamide and N-vinyl lactam (such as N-vinyl pyrrolidone)).
Among (c2), preferred is unsubstituted and alkyl-substituted acrylamides, particularly (meth)acrylamides, and more particularly acrylamide.

(c3) Carboxyl group-containing monomers:
unsaturated monocarboxylic acids (such as methacrylic acid, acrylic acid, (iso)crotonic acid and cinnamic acid), unsaturated dicarboxylic acids (such as maleic acid, itaconic acid, citraconic acid, and mesaconic acid), and monoalkyl (having 1 to 8 carbon atoms) esters of unsaturated dicarboxylic acid (such as monoalkyl maleate, monoalkyl fumarate, and monoalkyl itaconate).
Among the monomers (c), preferred from the viewpoint of viscosity index and shearing stability are (c1) and (c2), and particularly (c1).

(d) Alkyl (meth)acrylates other than (a), (b1) and (b2):

(d1) C5-C7 alkyl (meth)acrylates (such as n-, neo- and iso-pentyl (meth)acrylates, and n- and iso-hexyl (meth) acrylates);
(d2) C18-C36 branched alkyl (meth)acrylates other than (a) (such as 2-decyltetradecyl (meth)acrylate, 2-octyldodecyl (meth)acrylate, and 2-dodecylhexadecyl (meth)acrylate).

(e) C2-C20 unsaturated hydrocarbons:

(e1) C2-C20 unsaturated aliphatic hydrocarbons (C2-C20 alkenes (ethylene, propylene, isobutene, butene, pentene, heptene, diisobutylene, octene, dodecene and octadecene), C4-C12 alkadienes (butadiene, isoprene, 1,4-pentadiene, 1,6-heptadiene and 1,7-octadiene));
(e2) C5-C20 unsaturated alicylclic hydrocarbons (cycloalkenes (such as cyclohexene), dicycloalkadienes (such as cyclopentadiene and dicyclopentadiene), cyclic terpenes (such as pinene and limonene), vinyl (di) cycloalkenes (such as vinyl cyclohexene), ethylidene (di) cycloalkenes (such as ethylidene bicycloheptene and ethylidene norbornene) and aromatic ring-containing cycloalkenes (such as indene));
(e3) Unsaturated aromatic hydrocarbons (styrenes and derivatives thereof, for example, C1-C20 hydrocarbyl substituted styrenes (such as $\alpha$-methyl styrene, vinyl toluene, 2,4-dimethyl styrene, 4-ethyl styrene, 4-isopropyl styrene, 4-butyl styrene, 4-phenyl styrene, 4-cyclohexyl styrene, 4-benzyl styrene and 4-crotyl benzene) and C2-C10 alkenyl naphthalenes (such as 2-vinyl naphthalene)).

(f) Vinyl ketones:
C1-C10 alkyls or C6-C8 aryl vinyl ketones (such as methylvinyl ketone, ethylvinyl ketone, and phenylvinyl ketone).
(g) Epoxy group-containing unsaturated monomers:
epoxy group-containing acrylic monomers (such as glycidyl (meth)acrylate) and epoxy group-containing C2-C10 alkenyl (preferably, C3-C6 alkenyls) ethers (such as glycidyl (meth)allyl ether).
(h) Halogen atom-containing unsaturated monomers:
vinyl or vinylidene halides (such as vinyl chloride, vinyl bromide and vinylidene chloride), C3-C6 alkenyl halides ((meth) allyl chloride), halogen substituted styrenes ((di)chlorostyrene) and so on.
(i) Alkylalkenyl ethers:
alkyl (having 1 to 10 carbon atoms) alkenyl (having 2 to 10 carbon atoms) ethers (such as alkylvinyl ethers (methylvinyl ether, n-propylvinyl ether and ethylvinyl ether) and alkyl (meth) allyl ethers and (iso) propenyl ehters (methyl allyl ether and ethyl allyl ether)).
(j) Alkenyl carboxylates:
alkenyl (having 2 to 10 carbon atoms) carboxylates (having 1 to 10 carbon atoms) (such as vinyl acetate, vinyl propionate, vinyl butyrate, vinyl hexanoate, vinyl heptanoate, vinyl 2-ethylhexanoate and vinyl n-octanoate). Among (j), vinyl acetate and vinyl propionate are preferred.
(k) Nitrogen atom-containing unsaturated monomers other than amide group-containing monomers (c2):

(k1) Amino group-containing monomers
(k11) Amino group-containing aliphatic monomers
Amino group-containing (meth)acrylates ((mono-alkyl(having 1 to 4 carbon atoms)) amino alkyl (having 2 to 6 carbon atoms) (meth) acrylates (aminoethyl, aminopropyl, methylaminoethyl, ethylaminoethyl, butylaminoethyl and methylaminopropyl (meth)acrylates), di-alkyl (having 1 to 4 carbon atoms) aminoalkyl (having 2 to 6 carbon atoms) (meth) acrylates (dimethylaminoethyl (meth) acrylate, diethylaminoethyl (meth)acrylate and dibutylaminoethyl (meth)acrylate)), amino group-containing (meth)acrylamides corresponding to these (meth)acrylates, alkenyl amines (for example, (di)(meth)allyl amine and (iso)crotyl amine) and so on;
(k12) Amino group-containing heterocyclic monomers:
Amino group-containing heterocyclic acrylic monomers (morpholino-alkyl (having 2 to 6 carbon atoms) (meth) acrylates (morpholinoethyl (meth)acrylate)), vinyl substituted heterocyclic amines (vinylpyridines (4- and 2-vinylpyridine)), N-vinylpyrrole, N-vinylpyrrolidine and so on;
(k13) Amino group-containing aromatic monomers
Amino styrenes (such as amino styrene and (di)methyl amino styrene); and
(k14) Salts of the above amino group-containing monomers (hydrochloric salts, phosphoric salts and C1-C8 carboxylic acid salts).

(k2) Quaternary ammonium base-containing monomers:
quaternary ammonium bases obtained by quaternizing the above (k11) to (k13). As a quaternizing agent, there may be used C1-C8 alkyl halides (such as methyl chloride), benzyl halides (such as benzyl chloride), dialkyl (having 1 to 2 carbon atoms) sulfates (dimethyl sulfate and diethyl sulfate) and di $C_{1-2}$ alkyl carbonates (such as dimethyl carbonate).
(k2) also includes quaternary ammonium bases obtained by quaternizing (k14) by one or two or more kinds of alkylene (having 2 to 4 carbon atoms) oxide (ethylene oxide and propylene oxide).

(k3) Nitrile or nitro group-containing monomers (such as (meth)acrylonitrile and nitro styrene).

When cleanness is requested for (A), it is preferred to use the monomer (k) (particularly (k112 and (k121), and especially dimethyl aminoethyl (meth)acrylate, diethyl aminoethyl (meth)acrylate and morpholino ethyl (meth) acrylate) .
(m) Unsaturated dicarboxylic acid dialkyl esters:

hydrocarbyl (alkyl, cycloalkyl and aralkyl) esters of C1-C40 (preferably C1-C20) unsaturated dicarboxylic acid (such as maleic acid, fumaric acid, itaconic acid and citraconic acid) (such as dimethyl, diethyl, and dioctyl maleate, and corresponding fumarate and itaconate).

Preferably, the copolymer (A) further contains an additional monomer as a constituent monomer, besides (a).
When the copolymer (A) contains (a1) and (a2) as constituent monomers among (a), it is further preferred from the viewpoint of low-temperature viscosity characteristics and viscosity index that the following (i) to (iv) are contained as constituent monomers, and contents of respective monomers based on the total weight of (i) to (iv) are as follows.

(i): (a1)
(ii): (a2) (sum of (a1) and (a2) is 3 to 95% by weight)
(iii) : 4.9 to 70% by weight of alkyl (meth) acrylate having C1-C4 alkyl group (b1),and
(iv) : 0.1 to 90% by weight of at least one kind of monomer

(b2) selected from (meth) acrylates having a C8-C17 alkyl group other than (a1) and (a2) and (meth)acrylates having a C18-C24 straight-chain alkyl group.
When the copolymer (A) contains (a1) and (a2) as constituent monomers among (a), more preferred proportions of constituent monomers are as shown in Table 1 below.
[Table 1]

| Monomer | Preferable range (% by weight) | Further preferable range (% by weight) | Particularly preferable range (% by weight) |
|---|---|---|---|
| (a1) + (a2) | 3 to 95 | 5 to 85 | 25 to 74.9 |
| (b1) | 4.9 to 70 | 14.9 to 65 | 20 to 50 |
| (b2) | 0.1 to 90 | 0.1 to 75 | 5 to 50 |
| (k) | 0 to 15 | 0 to 10 | 0.1 to 10 |
| (c) to (m) *) | 0 to 50 | 0 to 30 | 0 to 20 |
| *) except(k) | | | |

When the copolymer (A) contains (a3) and/or (a4) as a constituent monomer among (a), it may contain one or more monomers selected from the group consisting of the (a1), (a2), (b1), (b2) and other monomers (c) to (m) as described above, besides (a3) and (a4) if necessary. Preferred monomers in each of (a1), (a2), (b1), (b2) and (c) to (m) are similar to those described above.
When the copolymer (A) contains a still another monomer as a constituent monomer, besides (a3) and/or (a4), contents of each monomer based on the total weight of (v) to (viii) below are preferably the amounts shown below from the viewpoint of low-temperature viscosity characteristics and viscosity index.

(v): (a3) and/or (a4)
(vi) : (a1) and/or (a2) as necessary ((a1), (a2), (a3) and (a4) are preferably 3 to 95% by weight as a total),
(vii): preferably 4.9 to 70% by weight of (b1),
(viii): preferably 0.1 to 90% by weight of (b2).
Weight ratio ((a1)+(a2))/((a3)+(a4)) in using (a1) and/or (a2) is preferably (10/90) to (70/30), and more preferably (30/70) to (60/40) from the viewpoint of viscosity index.

When the copolymer (A) contains (a3) and/or (a4) as a constituent monomer, the copolymer (A) still preferably has such a composition that (a1)+(a2) is replaced by (a1)+(a2)+(a3)+(a4) in Table 1.
A weight average molecular weight (hereinafter, abbreviated as Mw) of the copolymer (A) is generally 5,000 to 1,000,000. When the Mw is less than 5,000, the ability of improving viscosity index may be poor. When it is more than 1,000,000, the shearing stability may be poor. The Mw is measured by gel permeation chromatography, and is determined in terms of polystyrene. Measuring conditions are not particularly limited; however, measurement may be conducted, for example, in the following conditions:

Apparatus: HLC-802A available from TOSOH CORPORATION
Column: TSK gel GMH6 x2
Measurement temperature: 40°C
Sample solution: 0.5% by weight of solution in THF
Solution injection amount: 200 μL
Detector: refractive index detector
Standard: polystyrene

The Mw of (A) preferably falls in the ranges described in Table 2 below according to use applications of the lubricant composition from the viewpoint of improvement in viscosity index and shearing stability, although it differs depending on the kind of base oil, purpose of adding (A) and use application of the resultant lubricant composition. The Mw of (A) may be adjusted by temperature at the time of polymerization, monomer concentration (solvent concentration), an amount of catalyst, an amount of chain transfer agent and so on.
[Table 2]

| Application of lubricant composition | Preferable range of Mw | More preferable range of Mw | Further preferable range of Mw | Particularly preferable range of Mw |
|---|---|---|---|---|
| Engine oil | 100,000 or more | 150,000 to 1,000,000 | 200,000 to 800,000 | |
| ATF*, belt-CVTF**, gear oil, MTF*** | 5,000 to 150,000 | 10,000 to 80,000 | 12,000 to 55,000 | 20,000 to 50,000 |
| Operating oil | 5,000 to 600,000 | 10,000 to 500,000 | 12,000 to 400,000 | |

* ATF: Automatic Transmission Fluid
** belt-CVTF: Belt-Continuously Valuable Transmission Fluid
*** MTF: Manual Transmission Fluid

(A) has a SP (Solubility Parameter) value of generally 8.6 to 11, preferably 9.2 to 10.5, and particularly 9.4 to 9.8 from the viewpoint of solubility in the base oil and the effect of improving viscosity index. The SP value may be calculated by a method by Fedors (Polym. Eng. Sci. 14 (2) 152, (1974)). The SP value of (A) may be adjusted by calculating SP values of each of constituent units and selecting a kind and a molar ratio of a monomer so that an objective SP value is achieved. For example, in the case of alkyl (meth) acrylate, the SP value may be adjusted by length of an

alkyl group.

From the viewpoint of emulsification resistance, (A) has a HLB(Hydrophile-Lipophile Balance) value preferably ranging from 0.5 to 7, more preferably from 1 to 6.5, and particularly from 1.5 to 6. The HLB value in the present invention is a HLB value determined by ODA method, and is defined by the concept of organic nature and inorganic nature of an organic compound ("Shin. Kaimenkasseizai Nyumon" (New-Introduction to surfactant) written by Takehiko Fujimoto, published from Sanyo Chemical Industries, Ltd., p197-201).

(A) can be obtained by a known production method. For example, it can be obtained by radical polymerization of the above monomers in a solvent in the presence of a polymerization catalyst and/or a polymerization initiator.

As the solvent, for example, there may be mentioned aromatic solvents such as toluene, xylene, or C9-C10 alkyle benzene, aliphatic hydrocarbons (having 6 to 18 carbon atoms) such as hexane, heptane, cyclohexane and octane, alcoholic solvents (having 3 to 8 carbon atoms) such as 2-propanol, 1-butanol or 2-butanol, ketonic solvents such as methylethyl ketone, and mineral oils. Preferred are Mineral oils.

As the polymerization initiator, there may be used azo initiators (for example, 2,2'-azobis isobutylonitrile, 2,2'-azobis (2-methylbutylonitrile), 2,2'-azobis (2,4-dimethyl valeronitrile) (hereinafter, abbreviated as ADVN), dimethyl 2,2-azobis isobutylate and so on), and peroxide initiators (for example, t-butyl peroxy pivalate, t-hexyl peroxy pivalate, t-butyl peroxy neoheptanoate, t-butyl peroxy neodecanoate, t-butyl peroxy 2-ethylhexanoate, t-butyl peroxy isobutylate, t-amyl peroxy 2-ethylhexanoate, 1,1,3,3-tetramethylbutyl peroxy 2-ethylhexanoate, dibutyl peroxy trimethyl adipate, benzoyl peroxide, cumyl peroxide, lauryl peroxide and so on).

In producing (A), a chain transfer agent (for example, alkyl (having 2 to 20 carbon atoms) mercaptan and so on) may be used if necessary. Reaction temperature in polymerization is 50 to 140°C, and preferably 60 to 120°C. (A) may be obtained by bulk polymerization, emulsion polymerization or suspension polymerization, as well as the above-described solution polymerization. Further, polymerization mode of the copolymer (A) may be either random addition polymerization or alternating copolymerization, and also may be either graft copolymerization or block copolymerization.

(Second embodiment)

The second embodiment of the present invention relates to a viscosity index improver composition. Here, the term "viscosity index improver composition" means a solution in which the above-described viscosity index improver is dissolved in a diluting solvent (D).
It is preferred to use a viscosity index improver composition rather than to use a viscosity index improver itself because the copolymer (A) can be readily dissolved upon being added into a base oil by containing the diluting solvent (D) even when the copolymer (A) itself is viscous.

A viscosity index improver composition of the present invention contains the above viscosity index improver and the diluting solvent (D), and it is preferred that preferably 10 to 90% (hereinafter, % means % by weight unless otherwise specified), more preferably 20 to 90%, and particularly preferably 30 to 90% of the viscosity index improver, and preferably 10 to 90%, more preferably 10 to 80%, and particularly preferably 10 to 70% of the diluting solvent (D) based on the total amount of the viscosity index improver and the diluting solvent (D) are contained. Higher proportion of diluting solvent (D) is preferred in the point of easy dissolution in a base oil; however, it costs a lot to use the diluting solvent too much.
Kinetic viscosity at 100°C of the viscosity index improver composition of the present invention is generally 50 to 3,000 $mm^2/s$, preferably 70 to 2,500 $mm^2/s$, and more preferably 100 to 2,000 $mm^2/s$.

As the diluting solvent (D), the solvent used in the above-described polymerization step may be used, or a new one may be added. As the diluting solvent (D), there may be mentioned aliphatic solvents (C6-C18 aliphatic hydrocarbons (such as hexane, heptane, cyclohexane, octane, decalin and kerosene)); aromatic solvents {C7-C15 aromatic solvents (toluene, xylene, ethyl benzene, aromatic mixed solvents having 9 carbon atoms (trimethyl benzene, ethyl toluene and the like mixture), C10-C11 aromatic mixed solvents and so on)}, mineral oils (for example, solvent purified oil, paraffin oil, high viscosity index oil containing isoparaffin, high viscosity index oil by hydrogenolysis, and naphthene oil), synthetic lubricants (hydrocarbon-based synthetic lubricants (such as poly $\alpha$ olefinic synthetic lubricant and GTL base oil), ester-based synthetic lubricants) and so on. Among these, mineral oils and GTL base oils are preferred.

The GTL (Gas to Liquid) base oil is a lubricant base oil which is obtained by producing liquid hydrocarbon by Fischer-Tropsch process from materials such as CO and $H_2$ synthesized from natural gas by GTL technique, followed by a further treatment. Specific methods of producing liquid hydrocarbon are described in specifications of U.S. Patent No.5384336 and No.6740621, and a method of producing GTL base oil from liquid hydrocarbon is described, for example, in Japanese Kohyo Publication No. 2006-509899 and so on.

Preferred as the diluting solvent (D) is a diluting solvent having a flash point of 120°C or more, more preferably 130°C or more, further preferably 150°C or more, and particularly preferably 160°C or more. In the case that the flash point of the diluting solvent (D) is 120°C or more, the viscosity index improver composition containing the diluting solvent (D) can be handled safely even at high temperature.

As a diluting solvent having a flash point of 120°C or more, "YUBASE 2: available from SK Corporation" (flash point: 160°C), "YUBASE 3: available from SK Corporation" (flash point: 194°C) and so on can be exemplified.

(Third embodiment)

A lubricant composition which is the third embodiment of the present invention is a composition containing the above-described viscosity index improver and a base oil. The base oil has a kinetic viscosity at 100°C of 2 to 10 $mm^2/s$ and a flash point of 160°C or more, and 0.1 to 30% by weight of the copolymer (A) based on the weight of the lubricant composition. The viscosity index improver may be added to the base oil as a viscosity index improver composition. In this case, the lubricant composition also contains the diluting solvent (D).

As the base oil, there can be mentioned the above-described mineral oils, synthetic lubricants and so on. Among these, high viscosity index oil containing isoparaffin, high viscosity index oil by hydrogenolysis, poly $\alpha$ olefinic synthetic lubricant, ester synthetic lubricant and GTL base oil are preferred. These may be used singly or in combination of two or more kinds.

There are preferred ranges for kinetic viscosity at 100°C of the base oil as shown in Table 3 depending on the use applications of the lubricant composition. When the kinetic viscosity is less than 2 $mm^2/s$, oil film breakage is likely to occur to cause seizing. When it is more than 10 $mm^2/s$, viscosity index decreases.

The flash point of the base oil is generally 160°C or more, preferably 180°C or more, more preferably 190°C or more, and particularly preferably 200°C or more. When a base oil having a flash point of less than 160°C is used, flash point of the lubricant composition is low and the risk of fire increases, so that safe use is disabled.

Further, viscosity index of the base oil is preferably 80 or more, more preferably 100 or more, and particularly preferably 105 to 180. By using such a base oil, the viscosity index is further increased, and better saving effect of fuel consumption is realized.

Cloud point (JIS K2269-1993) of the base oil is preferably -5°C or less. More preferably, it is from -15°C to -60°C. When the cloud point of the base oil falls within this range, quantity of deposition of wax is small and low-temperature viscosity characteristics is good.

The total content of the copolymer (A) based on the weight of the lubricant composition is generally 0.1 to 30%, and has preferred ranges depending on the use application of the lubricant composition as shown in Table 3.

[Table 3]

| Application of lubricant composition | Engine oil | Gear oil, MTF, differential oil | ATF, belt-CVTF | Traction oil | Operating oil |
|---|---|---|---|---|---|
| Kinetic viscosity of base oil, $mm^2/s$ (100°C) | 3 to 10 (preferably 3 to 8) | 2 to 10 (preferably 2 to 5) | 2 to 6 (preferably 2 to 5) | 2 to 8 (preferably 2 to 5) | 2 to 10 (preferably 2 to 5) |
| Content of (A) (% by weight) | 0.5 to 15 (preferably 1 to 8) | 2 to 30 (preferably 5 to 20) | 2 to 30 (preferably 5 to 20) | 0.5 to 15 (preferably 1 to 8) | 0.5 to 25 (preferably 1 to 15) |

The lubricant composition of the present invention may further contain one or more kinds of organic compounds (P) represented by either of the formulas (6) to (9). By containing the organic phosphorus compound (P), the effect of preventing abrasion is exerted more easily.

$$O=P(OR^7)_a(OH)_{3-a} \qquad (6)$$

In the formula, a is an integer of 1 to 3; $R^7$ each independently is a C4-C24 alkyl group or alkenyl group, a C6-C24 aryl group, or a C7-C24 alkyl substituted aryl group, and a atoms of $R^7$ may be the same or different from each other. Specific examples of the compound represented by the formula (6) include monoalkyl phosphate, dialkyl phosphate, trialkyl phosphate, aryl esters corresponding to these or the like.

$$O=P(OR^8)_b(OH)_{3-b}\cdot NH_cR^9_{3-c} \qquad (7)$$

In the formula, b and c each is an integer of 1 or 2; $R^8$ and $R^9$ each independently is a C4 or higher alkyl group or alkenyl group, C6-C24 aryl group, or C7-C24 alkyl substituted aryl group, $R^8$ and $R^9$ may be the same or different from each other. Specific examples of the compound represented by the formula (7) include salts of monoalkyl phosphate, monoaryl phosphate, dialkyl phosphate, diaryl phosphate, etc., and monoalkyl amine or dialkyl amine.

$$P(OR^{10})_a(OH)_{3-a} \quad (8)$$

In the formula, a is an integer of 1 to 3; $R^{10}$ each independently is a C4 or higher alkyl group or alkyenyl group, a C6-C24 aryl group, or a C7-C24 alkyl substituted aryl group. Specific examples of the compound represented by the formula (8) include monoalkyl phosphite, dialkyl phosphite, trialkyl phosphite, aryl phosphites corresponding to these or the like.

$$P(OR^{11})_b(OH)_{3-b} \cdot NHCR^{12}{}_{3-c} \quad (9)$$

In the formula, b and c each is an integer of 1 or 2; $R^{11}$ and $R^{12}$ each independently is a C4 or higher alkyl group or alkenyl group, a C6-C24 aryl group, or a C7-C24 alkyl substituted aryl group, and $R^{11}$ and $R^{12}$ may be the same or different from each other. Specific examples of the compound represented by the formula (9) include salts of monoalkyl phosphite, monoaryl phosphite, dialkyl phosphite, diallylaryl phosphite, etc., and monoalkyl amine or dialkyl amine.

Specific examples of the groups respectively represented by $R^7$ to $R^{12}$ in the formulas (6) to (9) include C4-C24, preferably a C4-C20 alkyl groups or alkenyl groups such as a butyl group, a hexyl group, an octyl group, a decyl group, a dodecyl group, a tetradecyl group, a hexadecyl group, an octadecyl group and an oleyl group; aryl groups such as phenyl group; and alkyl substituted aryl groups such as a toluyl group. Among the examples of the organic phosphorus compound (P), alkyl phosphates having a C4-C18 alkyl group are preferred in those represented by the formula (7).

Content of these organic phosphorus compound (P) based on the weight of the lubricant composition is preferably 0.01 to 5%, and more preferably 0.1 to 3%.

The lubricant composition of the present invention may further contain alkyl (meth) acrylate copolymer (B) other than the aforementioned (A).

(B) is a copolymer containing two or more kinds of monomers other than the monomers of above (a1) to (a3), that is, two or more kinds of monomers selected from the group consisting of (b1), (b2) and (c) to (m).

Among (B), copolymers of (b1) and (b2) (preferably, copolymer having a monomer molar ratio of (b1)/(b2)= (0.01/99.99) to (40/60)), and copolymers containing two or more kinds of different monomers selected from (b2) are preferred, and copolymers containing two or more kinds of different monomers selected from (b2) are more preferred.

Among the copolymers containing two or more kinds of monomers selected from (b2), particularly preferred are a copolymer (B1) in which the average number of carbon atoms per one molecule of an alkyl group in two or more different kinds of monomers (average carbon number per one molecule calculated from carbon number of an alkyl group in each monomers and mole fraction of each monomer, hereinafter, abbreviated as Cav) is 12.0 to 13.0, and/or a copolymer (B2) in which a Cav is 13.1 to 15.0. Particularly preferred (B1) and (B2) are those having a straight-chain alkyl group as an alkyl group, and branched alkyl groups occupy 30% by mole or less, and particularly 10% by mole or less. As (B), both of (B1) and (B2) or either one of (B1) and (B2) may be used, however, preferably both of (B1) and (B2) are used.

Specific examples of (B1) and (B2) include copolymers of n-dodecyl methacrylate/n-octadecyl methacrylate ((60/40)% by mole to (90/10)% by mole, Cav=12.5 to 14.0), n-dodecyl methacrylate/n-hexadecyl methacrylate ((50/50) to (90/10)% by mole, Cav=12.3 to 13.8), n-dodecyl methacrylate/n-tetradecyl methacrylate ((30/70)% by mole to (90/10) % by mole, Cav=12.2 to 13.4), n-dodecyl acrylate/n-dodecyl methacrylate ((10/90)% by mole to (40/60)% by mole, Cav=12)) and so on.

Mw of (B) is preferably 10,000 to 1,000,000, and more preferably 15,000 to 370,000.

Addition amount of (B) is preferably 0 to 20%, more preferably 0.1 to 5%, and particularly preferably 0.1 to 1% based on the weight of the lubricant composition.

When both of (B1) and (B2) are used as (B), the weight ratio is generally (B1)/(B2)=(1/99) to (99/1), preferably (20/80) to (80/20), and more preferably (30/70) to (70/30). (B) may be produced by a similar method as that of the above (A).

The lubricant composition of the present invention may further contain other additives (C) that are well known in the art. As the additives (C), the following can be used.

Dispersant: polyalkenyl succinimides (bis- and mono-polybutenyl succinimides), Mannich condensates and borates;

Cleaner: basic, overbased or neutral metal salts (overbased or alkaline earth metal salts of sulfonates (such as petroleum sulfonate, alkylbenzene sulfonate, and alkylnaphthalene sulfonate)), salicylates, phenates, naphthenates, carbonates, phosphonates and a mixture thereof;

Antioxidant: hindered phenols and aromatic secondary amines;
Antifoaming agent: silicon oils, metal soaps, fatty acid esters, phosphate compounds and so on;

Oiliness improver: long-chain fatty acids and esters thereof (such as oleic acid and oleic acid ester), long-chain amines and amides thereof (such as oleyl amine and oleyl amide);

Friction and abrasion adjuster: molybdenum and zinc compounds (such as molybdenum dithiophosphate, molybdenum dithiocarbamate, and zinc dialkyl dithiophosphate);

Extreme pressure agent: sulfuric compounds (mono- and di-sulfide, sulfoxide and sulfur phosphide compounds), phosphide compounds and chloride compounds (chlorinated paraffin) and so on;
Anti-emulsifier: quaternary ammonium salts (tetraalkyl ammonium salts), sulfated oils, phosphates (phosphate of polyoxyethylene containing nonionic surfactant) and so on;
Corrosion inhibitor: nitrogen atom-containing compounds (benzotriazole and 1,3,4-thiodiazolyl-2,5-bis dialkyl dithiocarbamate) and so on.

Other additives (C) may be used in the amounts (% by weight, ppm for the antifoaming agent) as shown in Table 4 below, represented based on the weight of the lubricant composition.

[Table 4]

| Additive (c) | Dispersant | Cleaner | Antioxidant | Antifoaming agent (ppm) | Oiliness improver | Friction and abrasion adjuster | Extreme pressure gent emulsifier | Anti- | Corrosion inhibitor |
|---|---|---|---|---|---|---|---|---|---|
| Generally | 0 to 20 | 0 to 20 | 0 to 5 | 2 to 1000 | 0 to 5 | 0 to 5 | 0 to 20 | 0 to 3 | 0 to 3 |
| Preferably | 2.0 to 10 | 0.1 to 10 | 0.1 to 3 | 10 to 700 | 0.1 to 1 | 0.1 to 3 | 1 to 10 | 0 to 1 | 0 to 2 |

The total addition amount of other additives (C) is 30% by weight or less, and preferably 10 to 20% by weight, based on the weight of the lubricant composition.

Kinetic viscosity at 100°C of the lubricant composition of the present invention is preferably 2 to 16 $mm^2/s$, and there are preferred ranges as shown in Table 5 according to use applications of the lubricant composition. When the kinetic viscosity of the lubricant composition is 2 $mm^2/s$ or more, leakage and seizing are less likely to occur, whereas when the kinetic viscosity is 16 $mm^2/s$ or less, viscosity resistance is small, so that energy loss is less likely to occur. The lubricant composition of the present invention has lower kinetic viscosity than conventional lubricant compositions, so that it is superior in saving of fuel consumption.

[Table 5]

| Application Gear oil, lubricant composition | Engine oil | MTF, differential oil | ATF, belt-CVTF | Traction oil Operating | oil |
|---|---|---|---|---|---|
| Kinetic viscosity of base oil $mm^2/s$ (100°C) | 4 so 16 (preferably 5.6 to 9.3) | 4 to 16 (preferably 5 to 8) | 4 to 8 (preferably 4 to 6) | 4 to 8 (preferably 4 to 6) | 2 to 16 (preferably 3 to 10) |

The lubricant composition of the present invention is favorably used, for example, in gear oils such as differential oil and industrial gear oil, transmission oils such as manual transmission fluid (hereinafter, abbreviated as MTF), automatic transmission fluid (hereinafter, abbreviated as ATF) and belt-CVTF, traction oils such as toroidal-CVT fluid, operating oils such as shock absorber oil, power steering oil, operating oil for construction machine and industrial operating oil, and engine oil. Among these, differential oil, ATF, belt-CVT fluid, engine oil and MTF are preferred. ATF, belt-CVT fluid and MTF are more preferred. ATF is particularly preferred.

The lubricant composition of the present invention has good shearing stability, and when a test is made according to the method defined by CEC L45-45-A-99 while the test time is set at 20 hours, viscosity decreasing rate is preferably 20% or less (viscosity decreasing rate is not represented by "% by weight"), more preferably 15% or less, and particularly preferably 10% or less.

(Forth embodiment)

A monomer composition which is the fourth embodiment of the present invention is a monomer composition containing two or more kinds of monomers selected from monomers (a) represented by the formula (1).

[Chem. 10]

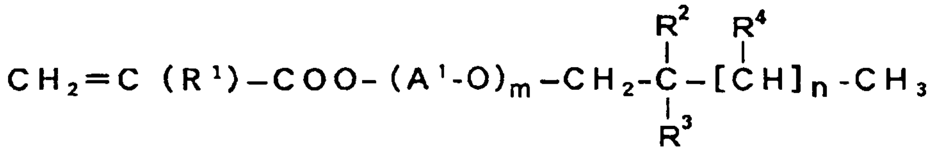

(1)

In the formula, $R^1$ is hydrogen atom or methyl group;
$R^2$ is hydrogen atom or a C1-C3 alkyl group;
$R^3$ is hydrogen atom or a C8-C40 alkyl group;
n atoms of $R^4$ each independently is hydrogen atom or a C1-C3 alkyl group;
the total number of carbon atoms in $-CH_2-C(R^2)(R^3)-[CH(R^4)]_n-CH_3$ is 14 to 80;
n is an integer of 4 to 36;
at least one of $R^2$ and n atoms of $R^4$ is a C1-C3 alkyl group;
$A^1$ is a C2-C4 alkylene group; and
m is 0 or an integer of 1 to 20.

In the drawing, specific examples and preferred ones of $R^1$, $R^2$, $R^3$, $R^4$, $R^5$, $R^6$, $A^1$, n, k and m are as described above.

Among the above monomer composition, preferred from the viewpoint of solubility and low-temperature viscosity characteristics of the viscosity index improver obtained by using the monomer composition are a monomer composition (x) and a monomer composition (z) as follows.

Monomer composition (x):

Monomer composition (x) containing a monomer (x1) in which both $R^2$ and $R^3$ in the formula (1) are hydrogen atom, and a monomer (x2) in which $R^2$ is methyl group and $R^3$ is hydrogen atom, n in (x1) and (x2) each being an integer of 6 to 14, the total number of carbon atoms in $-CH_2-C(R^2)(R^3)-[CH(R^4)]_n-CH_3$ being 16 to 18, and containing 70 to 90% by mole of (x1) and 10 to 30% by mole of (x2) based on the total number of moles of (x1) and (x2).

Monomer composition (z):

Monomer composition (z) containing a monomer (z1) in which $R^3$ in the formula (1) is $-CH_2-CH(R^5)-[CH(R^6)]_k-CH_3$, and both $R^2$ and $R^5$ are hydrogen atom; a monomer (z2) in which both $R^2$ and $R^5$ are methyl group; and a monomer (z3) in which either one of $R^2$ and $R^5$ is hydrogen atom and the other is methyl group, n and k in (z1) to (z3) each being an integer of 4 to 36, the total number of carbon atoms in $-CH_2-C(R^2)(R^3)-[CH(R^4)]_n-CH_3$ being 28 to 80, and containing 49 to 82% by mole of (z1), 0 to 9% by mole of (z2), and 18 to 42% by mole of (z3) based on the total number of moles of (z1) to (z3).

m is preferably 0 or 1 to 10, more preferably 0 or 1 to 5, and particularly 0 from the viewpoint of solubility and low-temperature viscosity characteristics of the viscosity index improver obtained by using the monomer composition.

As a specific example of the monomer composition (x), there may be mentioned (meth)acrylate of "NEODOL 67" as described above.

(Meth)acrylate of "NEODOL 67" may be produced by esterification reaction or transesterification reaction between "NEODOL 67" (alcohol component) and (meth) acrylic acid or an ester formable derivative thereof. As the ester formable derivative, for example, (meth)acrylic acid halides (for example, (meth)acrylic acid chloride, (meth)acrylic acid bromide and so on), (meth)acrylic anhydride and lower alkyl (having 1 to 4 carbon atoms: methyl, ethyl and so on, preferably methyl) esters of (meth)acrylic acid may be used.

Esterification reaction or transesterification reaction is conducted by a non-solvent method or a solvent method. Alcohol, polymerization inhibitor, solvent (excluded in the non-solvent method), catalyst and (meth)acrylic acid or ester formable derivative thereof are charged in a reaction vessel, and allowed to react at normal pressures or reduced pressures. Reaction temperature is 70 to 140°C, and preferably 100 to 120°C.

As the solvent, aromatic solvents, mineral oils and the like as described above may be used, and benzene, toluene, xylene and the like whose by-products such as water and lower alcohol are easily separated and removed are preferred.

As the polymerization inhibitor, quinonic compounds (such as hydroquinone, hydroquinone monomethyl ether, p-benzoquinone, t-butyl cresol-and catechol), phenothiazine, oxygen, air and the like may be used singly or in combination of two or more kinds.

As the catalyst, acidic catalysts (such as sulfuric acid, hydrochloric acid, p-toluenesulfonic acid, methanesulfonic acid, benzenesulfonic acid and xylenesulfonic acid), basic catalysts (such as caustic soda, caustic potash, sodium alcoholate, and amine), inorganic carriers (silica gel, alumina, hydroxyl apatite, zeolite, clay, molecular sieves) and polymeric carriers (polymer and dendrimer) bearing the above-described acidic catalyst, amine catalyst and the like may be used.

The reaction solution after completion of the reaction is washed with water or an alkaline aqueous solution if necessary, and purified by removing the catalyst, polymerization inhibitor, unreacted (meth) acrylic acid and so on.

As a specific example of the monomer composition (z), there can be mentioned (meth)acrylate of alcohol obtained by dimerizing the above-described "NEODOL 67" by the Guerbet reaction.

The Guerbet reaction is conducted by non-solvent method or solvent method. Alcohol, alkaline catalyst, dehydrogenation catalyst, and solvent (excluded in non-solvent method) are charged in a reaction vessel, and allowed to react at normal pressure or reduced pressure. Details of reaction conditions are described, for example, in Ind. Eng. Chem. 53, 33(1961), Journal of Molecular Catalysis, 33(1985), Japanese Kokai Publication Hei-9-22742, Japanese Patent Publication No. 2669553 and so on. As a specific example, reaction temperature is 120 to 280°C, and preferably 135 to 250°C. Examples of the alkaline catalyst include metallic sodium, sodium alcoholate, sodium hydroxide, sodium carbonate, sodium amide, metallic potassium, potassium amide, potassium hydroxide, potassium carbonate, potassium phosphate, metallic rubidium, rubidium carbonate, rubidium hydroxide, metallic cesium, cesium carbonate, cesium hydroxide and so on. Among these, potassium hydroxide, rubidium hydroxide, and cesium hydroxide are preferred because they have excellent reactivity. Further, potassium hydroxide is preferred because it is excellent in cost performance and availability. Use amount is within the range of 0.1 to 10% by weight, preferably 0.5 to 3% by weight, relative to alcohol.

As the dehydrogenation catalyst, there may be used, for example, copper-chromite, copper-nickel, copper-nickel-ruthenium, copper-nickel-palladium, copper powder, copper-zinc, copper-zinc-ruthenium, zinc oxide, zinc-chromite, stabilized nickel, alumina silicate, or nickel, platinum, palladium, ruthenium, rhodium, rhenium carried on activated charcoal, or Raney catalysts (nickel, chromium, copper and so on), potassium phosphate, calcium oxide and the like. Use amount of the dehydrogenation catalyst is preferably 0.001 to 1.0% by weight, and further preferably 0.003 to 0.2% by weight, relative to alcohol. Such dehydrogenation catalyst may be used in the state that it is carried on a carrier, if necessary. As the carrier, there may be mentioned $SiO_2$ such as silica gel, or composite oxides such as $TiO_2$-$SiO_2$, ZnO-$SiO_2$, $SiO_2$-MgO and $SiO_2$-CaO, or composite oxides containing $Al_2O_3$ and the like, and there can be used synthetic products (such as silica alumina and zeolite), natural products (such as diatomaceous earth, activated clay, acid clay, zeolite and montmorillonite) and the like mineral oxides. Among these, composite oxides containing $Al_2O_3$ and the like (synthetic products, natural products) are preferable because of their great effects. Further, diatomaceous earth is more preferred because of its low specific resistance in filtration, excellence in cost performance and availability and so on.

Conditions of esterification reaction and transesterification reaction are similar to those defined above.

The monomer composition of the present invention is suited for a material of the copolymer (A) used as the viscosity index improver.

(Fifth embodiment)

A polymer according to the fifth embodiment of the present invention is a polymer having a weight average molecular weight of 5,000 to 2,000,000 obtained by polymerizing the monomer composition (x) or the monomer composition (z). The copolymer may further contain another monomer, and as such a monomer, there can be mentioned the monomers of (b1), (b2), and (c) to (m). Weight ratio between monomers represented by the formula (1) and other monomers in the copolymer is not particularly limited; however, when the copolymer is used as the above-described viscosity index improver, the weight ratio in which the above-described monomers (a1) to (a3) are replaced by the monomers represented by the formula (1) is preferred. The copolymer may be obtained in a similar method as that of producing the copolymer (A) as described above.

The viscosity index improver of the present invention is excellent not only in shearing stability, viscosity index improving ability, sludge dispersibility and friction characteristics, but also in low-temperature viscosity characteristics.

BRIEF DESCRIPTION OF THE DRAWINGS

Fig. 1 is a $^1$H-NMR chart of 67MA.
Fig. 2 is a $^{13}$C-NMR chart of 67MA.
Fig. 3 is an IR chart of 67MA.
Fig. 4 is a $^1$H-NMR chart of G67MA.
Fig. 5 is a $^{13}$C-NMR chart of G67MA.
Fig. 6 is a n IR chart of G67MA.

BEST MODE FOR CARRYING OUT THE INVENTION

<Examples>

In the following, the present invention will be explained more specifically; however, the present invention will not be limited to these examples. In production examples, examples, and comparative examples, "part(s)" represents "part(s) by weight", and "%" represents "% by weight".

(Measuring method of weight average molecular weight by GPC)

Apparatus: HLC-802A available from TOSOH CORPORATION
Column: TSK gel GMH6 x2
Measurement temperature: 40°C
Sample solution: 0.5% by weight of solution in THF
Solution injection amount: 200 μL
Detector: refractive index detector

Standard: polystyrene

<Testing method of pentane insoluble fraction>

After conducting the oxidation test according to JIS K2514 (ISOT method: Indian Steering Oxidation Test) while modifying test time to 96 hours and temperature to 150°C, a sludge amount was determined by pentane insoluble fraction A method and B method according to JPI-5S-18-80.

<Measuring method of coefficient of kinetic friction>

Measurement was made by SAE No.2 testing method.
According to JASO M348-95, μd of 2000th cycle was measured (μd=0.128 at 2000th cycle of reference oil T2).

<Testing method of flash point>

Measurement was made by a measuring method by Cleveland open-cup method according to JIS K2265.

<Testing method of low temperature viscosity>

Viscosity at -40°C was measured by the method according to JPI-5S-26-85.

<Testing method of viscosity index>

Viscosity index was calculated by the method according to JIS K2283.

<Testing method of shearing stability>

Measurement was made according to the method of CEC L45-45-A-99, while test time was set at 20 hours.

<Measuring method of kinetic viscosity>

Kinetic viscosity was measured by the method of JIS K2283.

(Examples 1 to 8 and Comparative examples 1 to 4)

Into a reaction vessel equipped with a stirrer, a heating and cooling device, a thermometer, a dropping funnel, and a nitrogen blowing tube was charged 25 parts of mineral oil (high viscosity index oil: flash point=164°C). Into another glass beaker were charged a total of 100 parts of monomers described in Table 6, an amount described in Table 6 of dodecyl mercaptan (abbreviated as DM) as a chain transfer agent, and 0.5 part of 2,2'-azobis(2,4-dimethyl valeronitrile) (abbreviated as ADVN) as a radical polymerization initiator, and then the mixture was stirred and mixed at 20°C to prepare a monomer solution, followed by introducing it into the dropping funnel. After replacing a gas phase part in the reaction vessel with nitrogen, the monomer solution was dropped over 4 hours at 85°C in hermetical condition, and then aged at 85°C for 2 hours after completion of dropping. The obtained polymer was heated at 130°C for 3 hours under reduced pressure to remove volatile monomer. Thereto was added 41.7 parts of mineral oil (high viscosity index oil: flash point=164°C), and the mixture was dissolved uniformly by stirring for another one hour to obtain viscosity index improver compositions (A-1) to (A-8), (X-1) to (X-4) having a content of copolymer of 60%. The Mws of the obtained polymers are shown in Table 6.

(Production examples 1, 2)

Diluting solvent Solutions (B-1) and (B-2) of copolymer (B) other than copolymer (A) (content of polymer is 60%) were produced in a similar manner as that in Example 1 except that the monomer, the chain transfer agent and the radical polymerization initiator were changed as described in Table 6.
Cav of (B-1)=12.2

Cav of (B-2)=13.9

Abbreviations used in Table 6 and in the description herein below have the following meanings.

67MA: methacrylate of "NEODOL 67"
G67MA: methacrylate of dimer of "NEODOL 67"
G67EOMA: methacrylate of ethylene oxide 1 mole adduct of dimer of "NEODOL 67"
MMA: methyl methacrylate
n-HMA: n-hexadecyl methacrylate
n-OMA: n-octadecyl methacrylate
n-DMA: n-dodecyl methacrylate
n-TMA: n-tetradecyl methacrylate
DTM: 2-decyltetradecyl methacrylate
DAE: dimethyl aminoethyl methacrylate

[Table 6]

| | | | Viscosity index improver composition | | | | | | | | | | | | Diluting solution of (B) | |
|---|---|---|---|---|---|---|---|---|---|---|---|---|---|---|---|---|
| | | | Examples | | | | | | | | Comparative Examples | | | | Production Examples | |
| | | | 1 | 2 | 3 | 4 | 5 | 6 | 7 | 8 | 1 | 2 | 3 | 4 | 1 | 2 |
| Trade name | | | A-1 | A-2 | A-3 | A-4 | A-5 | A-6 | A-7 | A-8 | X-1 | X-2 | X-3 | X-4 | B-1 | B-2 |
| Amount of monomer | (a1) + (a2) | 67MA | 38 | 50 | 40 | - | - | - | - | 35 | - | - | - | - | - | - |
| | (a3) | G67MA | - | - | - | 43 | 42 | 43 | - | 35 | - | - | - | - | - | - |
| | | G67EOMA | - | - | - | - | - | - | 30 | - | - | - | - | - | - | - |
| | (b1) | MMA | 32 | 30 | 27 | 42 | 37 | 34 | 31 | 30 | 5 | 35 | 38 | 30 | - | - |
| | (b2) | n-HMA | 21 | - | 21 | 11 | - | 14 | - | - | - | 21 | 32 | 14 | - | 21 |
| | | n-OMA | 9 | - | 9 | 4 | - | 6 | - | - | - | 9 | - | 6 | 5 | 9 |
| | | n-DMA | - | 10 | - | - | 6 | - | 20 | - | 95 | 5 | - | 25 | 95 | 35 |
| | | n-TMA | - | 10 | - | - | 15 | - | 19 | - | - | - | - | 25 | - | 35 |
| | (d) | DTM | - | - | - | - | - | - | - | - | - | 30 | 30 | - | - | - |
| | (k) | DAE | - | - | 3 | - | - | 3 | - | - | - | - | - | - | - | - |
| Amount of DM | | | 1.0 | 1.0 | 1.0 | 1.0 | 1.0 | 1.0 | 1.0 | 1.0 | 1.0 | 1.0 | 1.0 | 1.0 | 0.5 | 0.5 |
| Amount of ADVN | | | 0.5 | 0.5 | 0.5 | 0.5 | 0.5 | 0.5 | 0.5 | 0.5 | 0.5 | 0.5 | 0.5 | 0.5 | 0.4 | 0.4 |
| Mw ($\times 10^4$) | | | 3.0 | 3.0 | 3.0 | 3.0 | 3.0 | 2.0 | 3.0 | 3.0 | 3.0 | 3.0 | 3.0 | 3.0 | 5.0 | 5.0 |

* Unit of values in the Table is "part(s) by weight", except Mw

(Examples 9 to 17, Comparative examples 5 to 6)

The above-described viscosity index improver composition, a diluting solvent solution of the above-described copolymer (B), the following other additives (C), and the following base oil were blended in blending proportions (%) as described in Table 7 to prepare lubricant compositions of Examples 9 to 17 and Comparative examples 5 to 6; followed by measurement of pentane insoluble fraction, coefficient of kinetic friction ($\mu$d) and flash point. Results are shown in Table 7. In Table 7, the A method represents pentane insoluble fraction after ISOT, and the B method represents pentane insoluble fraction when a coagulant is added. Therefore, difference between the A method and the B method represents sludge dispersibility. Sludge amounts in the A method and the B method show antioxidative property, and the smaller amount represents the better property.

Other additives (C):

oleyl amine salt of dilauryl phosphate (corresponding to organophosphorus compound (P)): 1%,
polybutenyl succinimide ("Hitec E638" available from EthylCooper) (corresponding to dispersant): 3%,
overbased Ca sulfonate ("Hitec E611" available from EthylCooper) (corresponding to cleaner): 1%,
zinc dialkyldithio phosphate ("Amoco194" available from AMOCO) (corresponding to friction and abrasion adjuster) : 0.3%,

2,6-di-tert butyl-p-cresol ("Lubrizol 817" available from The Lubrizol Corporation) (corresponding to antioxidant): 0.2%.

Base oils:

base oil 1: high viscosity index oil (mineral oil, kinetic viscosity at 100°C: 3 $mm^2/s$, viscosity index: 115, flash point: 200°C)
base oil 2: solvent purified oil (mineral oil, kinetic viscosity at 100°C: 1.9 $mm^2/s$, flash point: 152°C)
[Table 7]

| | | Viscosity index improver composition used | | Base oil used | | Evaluation results | | | | |
|---|---|---|---|---|---|---|---|---|---|---|
| | | | | | | Pentane insoluble fraction (%) | | | μd | Flash point |
| | | | | | | Antioxidative property | | Sludge dispersion | | |
| | | Trade name | Amount | type | Amount | A method | B method | B-A | | |
| Examples | 9 | A-1 | 10.0 | Base oil 1 | 84.5 | 0.0 | 0.2 | 0.2 | 0.146 | 200 |
| | 10 | A-2 | 10.0 | Base oil 1 | 84.5 | 0.0 | 0.2 | 0.2 | 0.143 | 200 |
| | 11 | A-3 | 10.0 | Base oil 1 | 84.5 | 0.0 | 0.1 | 0.1 | 0.143 | 200 |
| | 12 | A-3 | 9.7 | Base oil 1 | 84.5 | 0.0 | 0.2 | 0.2 | 0.145 | 200 |
| | | B-1 | 0.15 | | | | | | | |
| | | B-2 | 0.15 | | | | | | | |
| | 13 | A-4 | 10.0 | Base oil 1 | 84.5 | 0.0 | 0.2 | 0.2 | 0.147 | 200 |
| | 14 | A-5 | 10.0 | Base oil 1 | 84.5 | 0.0 | 0.2 | 0.2 | 0.145 | 200 |
| | 15 | A-6 | 10.0 | Base oil 1 | 84.5 | 0.0 | 0.1 | 0.1 | 0.145 | 200 |
| | 16 | A-7 | 10.0 | Base oil 1 | 84.5 | 0.0 | 0.2 | 0.2 | 0.145 | 200 |
| | 17 | A-8 | 10.0 | Base oil 1 | 84.5 | 0.0 | 0.2 | 0.2 | 0.145 | 200 |
| Comparative Examples | 5 | X-1 | 10.0 | Base oil 1 | 84.5 | 0.9 | 1.0 | 0.1 | 0.132 | 200 |
| | 6 | X-1 | 19.7 | Base oii 2 | 74.5 | 0.8 | 1.1 | 0.3 | 0.133 | 153 |
| *Unit of Amount is "part(s) by weight" | | | | | | | | | | |

(Examples 18 to 26, Comparative examples 7 to 10)

The above-described viscosity index improver composition, a solution of the above-described copolymer (B) in diluting solution, and the above base oil 1 were blended in blending ratios shown in Table 8 to prepare lubricant compositions of Examples 18 to 26 and Comparative examples 7 to 10; followed by measurement of low temperature viscosity, viscosity index, shearing stability and kinetic viscosity. Results are shown in Table 8.
[Table 8]

| | | Viscosity index improver composition used | | Base oil used | | Evaluation results | | | |
|---|---|---|---|---|---|---|---|---|---|
| | | Trade name | Amount | Type | Amount | Low temperature viscosity at -40°C | Viscosity index | Shearing stability (%° | kinetic viscosity at 100°C (mm²/s) |
| Examples | 18 | A-1 | 17.0 | Base oil 1 | 83.0 | 5300 | 221 | 9.2 | 5.6 |
| | 19 | A-2 | 17.0 | Base oil 1 | 83.0 | 5400 | 221 | 9.4 | 5.6 |
| | 20 | A-3 | 17.0 | Base oil 1 | 83.0 | 5500 | 220 | 9.0 | 5.6 |
| | 21 | A-3 | 16.7 | Base oil 1 | 83.0 | 5200 | 220 | 9.4 | 5.6 |
| | | B-1 | 0.15 | | | | | | |
| | | B-2 | 0.15 | | | | | | |
| | 22 | A-4 | 17.0 | Base oil 1 | 83.0 | 6000 | 226 | 8.8 | 5.6 |
| | 23 | A-5 | 17.0 | Base oil 1 | 83.0 | 5700 | 223 | 8.9 | 5.6 |
| | 24 | A-6 | 17.0 | Base oil 1 | 83.0 | 5400 | 224 | 8.9 | 5.6 |
| | 25 | A-7 | 17.0 | Base oil 1 | 83.0 | 5400 | 223 | 9.0 | 5.6 |
| | 26 | A-8 | 17.0 | Base oil 1 | 83.0 | 5300 | 222 | 8.8 | 5.6 |
| Comparative Examples | 7 | X-1 | 17.0 | Base oil 1 | 83.0 | 6800 | 192 | 14.0 | 5.6 |
| | 8 | X-2 | 17.0 | Base oil 1 | 83.0 | 8300 | 220 | 9.2 | 5.6 |
| | 9 | X-3 | 17.0 | Base oil 1 | 83.0 | 8200 | 220 | 9.2 | 5.6 |
| | 10 | X-4 | 17.0 | Base oil 1 | 83.0 | 9000 | 195 | 9.8 | 5.6 |
| * Units of amount value is "part(s) by weight", low temperature viscosity is "mPa·s" | | | | | | | | | |

The results shown in Table 7 and Table 8 demonstrate that the lubricant compositions containing a viscosity index improver of the present invention have excellent sludge dispersibility, friction characteristics, viscosity index and shearing stability, and further have excellent low-temperature viscosity characteristics.

(Example 27) Production example of 67MA

Into a 2L reaction vessel equipped with a thermometer, a stirrer, a dewatering tube, a cooling tube, an air and nitrogen blowing tube, and a dropping funnel was charged 1000 parts of "NEODOL 67", followed by dropping of 1.1 parts of hydroquinone, 4 parts of concentrated sulfuric acid, and 446 parts of methacrylic acid over 2 hours with air (25 mL/min.) blown into the liquid at a reaction temperature of 90°C. Simultaneously, temperature was raised so that the temperature at the end of dropping was 125°C. Thereafter, the mixture was aged at 125°C for 2 hours. From dropping

of methacrylic acid to the end of maturation, the reaction was allowed to proceed while generating water was removed outside the system. After the end of the aging, unreacted methacrylic acid was removed by changing the pressure from normal pressure to 4 kPa at 125°C. After cooling to 30°C or less, 34 parts of 10% caustic soda aqueous solution was dropped under stirring to neutralize the mixture, and after leaving the mixture at rest for 4 hours, the mixture was separated into an upper layer and a lower layer. To a crude product of the upper layer was added 5 parts of an adsorbent, KYOWARD 500SH (Kyowa Chemical Industries.) and then the mixture was stirred at 60°C for 60 minutes and dewatered under reduced pressure, followed by filtration. In this manner, 950 parts of 67MA was obtained. $^{1}$H-NMR, $^{13}$C-NMR, IR, and fluid temperature (JIS K2269) of the obtained 67MA were measured.

Figs. 1 to 3 show charts of $^{1}$H-NMR, $^{13}$C-NMR, and IR.

$^{1}$H-NMR ($CDCl_3$, 300 MHz) : δ6.08 (s, 1H), 5.52 (s, 1H), 4.12 (t, J=6.7 Hz, 1.7H), 4.06-3.99 (m, 0.3H), 1.93 (s, 3H), 1.7-1.5 (m, 1.8H), 1.4-1.1 (m, 22.8H), 0.95-0.81 (m, 7.5H),

$^{13}$C-NMR ($CDCl_3$, 300 MHz) : δ167.1, 136.4, 124.8, 64.6, 37.0, 32.6, 31.8, 29.9, 29.6, 29.5, 29.3, 29.1, 28.5, 27.0, 25.9, 22.6, 22.5, 19.5, 18.1, 13.9,

IR (NaCl) : 2922, 2852, 1720, 1456, 1319, 1294, 1159, 1011,-935, 814 $cm^{-1}$,

Fluid temperature: -55°C or less

Acrylate corresponding to 67MA was also produced in a similar synthetic method.

(Example 28)

Production example of G67MA

(1) Production of dimerized alcohol of NEODOL 67

Into a 0.5L reaction vessel equipped with a thermometer, a stirrer, a dewatering tube, a cooling tube, and a nitrogen blowing tube were charged 100 parts of "NEODOL 67" (available from Shell Chemicals), 1 part of potassium hydroxide, and 0.01 part of palladium carbon, followed by bubbling of nitrogen in liquid at 30 mL/min under stirring. Then, temperature was raised to 200°C under a degree of reduced pressure of 650 torr (=86.7 kPa). After the temperature had reached 220°C, the degree of reduced pressure was changed to 200 torr (=26.7 kPa) and the reaction was allowed to proceed for 10 hours. During reaction, generating water was removed outside the system. After cooling, the catalyst was filtered off, and to the filtrate were added 200 parts of toluene, 200 parts of water and 0.1 N of hydrochloric acid, thereby neutralizing the aqueous phase. After the toluene phase was dewatered by anhydrous magnesium sulfate and filtrated, toluene was distilled off to obtain 80 parts of reaction mixture containing dimerized alcohol of NEODOL 67 (content of dimerized alcohol of NEODOL 67: 60% by weight). This reaction mixture was subjected to preparative GPC (LC09: Japan Analytical Industry Co., Ltd.) to obtain 47 parts of an objective dimerized alcohol of NEODOL 67.

(2) Production of G67MA by esterification reaction

Into a 0. 5L reaction vessel equipped with a thermometer, a stirrer and a dropping funnel were charged 47 parts of "dimerized alcohol of NEODOL 67" and 1.9 parts of N,N dimethyl aminopyridine, and the temperature was raised to 40°C. Then, 15.9 parts of methacrylic anhydride was dropped by means of the dropping funnel over 30 minutes. After completion of the dropping, the mixture was aged at 40°C for 4 hours and then cooled to 30°C or less. To the mixture were added 100 parts of water and 100 parts of diethyl ether, and the aqueous phase was neutralized with 0.1N KOH aqueous solution. After liquid separation, the ether phase was dewatered by adding anhydrous magnesium sulfate and filtered off, and then ether was distilled off to obtain 52 parts of methacrylic ester of dimerized alcohol of NEODOL 67 (G67MA). $^{1}$H-NMR, $^{13}$C-NMR, and IR of the obtained G67MA were measured.

Figs. 4 to 6 show charts of $^{1}$H-NMR, $^{13}$C-NMR, and IR.

$^{1}$H-NMR ($CDCl_3$, 300 MHz) : δ6.07 (s, 1H), 5.50 (s, 1H), 4.02 (t, J=5.5 Hz, 2H), 1.92 (s, 3H), 1.7-1.5 (m, 4H), 1.4-1.1 (m, 46.4H), 0.90-0.81 (m, 15H),

$^{13}$C-NMR ($CDCl_3$, 300 MHz) : δ167.4, 136.5, 124.9, 67.4, 37.1, 32.7, 31.9, 30.0, 29.9, 29.7, 29.5, 29.4, 27.1, 26.7, 22.7, 22.6, 19.7, 18.3, 14.1,

IR: 2922, 2852, 1720, 1462, 1319, 1163, 937, 812, 721 $cm^{-1}$,

Acrylate of dimerized alcohol of NEODOL 67 was also produced in a similar synthetic method.

Industrial applicability

The viscosity index improver of the present invention is suited for a viscosity index improver used in a lubricant composition of driving system lubricants for transportation machines and for various machine tools (gear oils (such as manual transmission fluid and differential oil), automatic transmission oils (such as automatic transmission fluid, belt

CVT fluid and toroidal CVT fluid)), operating oils (such as operating oil of machine, power steering oil and shock absorber oil) , and engine oils (for gasoline, diesel and so on). Monomer compositions of the present invention may be used as a monomer composition which is a material of a polymer, and the polymer is suited for a copolymer for a viscosity index improver. The polymer may also be used as a binder component for other use applications such as for paints, adhesives, or textile treating agents.

## Claims

1. A viscosity index improver containing a copolymer (A) which contains a monomer (a) represented by the formula (1) as a constituent monomer;

[Chem. 1]

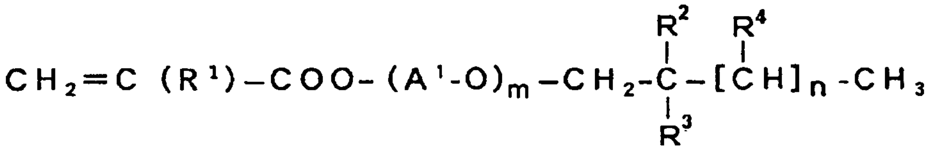

(1)

(wherein
$R^1$ is hydrogen atom cr methyl group;
$R^2$ is hydrogen atom or a C1-C3 alkyl group;
$R^3$ is hydrogen atom or a C8-C40 alkyl group;
n atoms of $R^4$ each independently is hydrogen atom or a
C1-C3 alkyl group;
the total number of carbon atoms in $-CH_2-C(R^2)(R^3)-[CH(R^4)]_n-CH_3$ is 14 to 80;
n is an integer of 4 to 36;
at least one of $R^2$ and n atoms of $R^4$ is a C1-C3 alkyl group; $A^1$ is a C2-C4 alkylene group; and
m is 0 or an integer of 1 to 20).

2. The viscosity index improver according to claim 1,
wherein said monomer (a) is a monomer (a1) represented by the formula (2) in which both of $R^2$ and $R^3$ in the formula (1) are hydrogen atom, and the total number of carbon atoms in $-CH_2-C(R^2)(R^3)-[CH(R^4)]_n-CH^3$ is 14 to 40;

[Chem. 2]

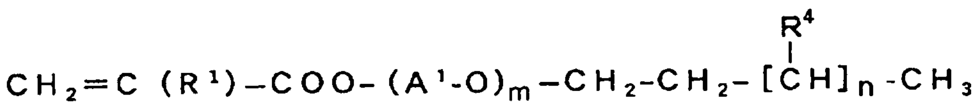

(2)

(wherein
$R^1$ is hydrogen atom or methyl group;
n atoms of $R^4$ each independently is hydrogen atom or a C1-C3 alkyl group;
the total number of carbon atoms in $-CH_2-CH_2-[CH(R^4)]_n-CH_3$ is 14 to 40;
n is an integer of 4 to 36;
at least one of n atoms of $R^4$ is a C1-C3 alkyl group; $A^1$ is a C2-C4 alkylene group; and
m is 0 or an integer of 1 to 20).

3. The viscosity index improver according to claim 2,
wherein said monomer (a1) is a monomer in which one to three out of n atoms of $R^4$ in the formula (2) is methyl group and the remainder is hydrogen atom.

4. The viscosity index improver according to claim 2 or 3,
wherein said monomer (a1) is a monomer in which the total number of carbon atoms in $-CH_2-CH_2-[CH(R^4)]_n-CH_3$ in the formula (2) is 16 to 18.

**5.** The viscosity index improver according to any one of claims 2 to 4,
wherein said copolymer (A) contains two or more kinds of monomers as constituent monomers, each of the monomers having a different number of methyl groups among n atoms of $R^4$s in the formula (2), and
an average of one to three of said $R^4$s are methyl group per one molecule and the remainder is hydrogen atom in the two or more kinds of monomers.

**6.** The viscosity index improver according to any one of claims 2 to 5,
wherein said copolymer (A) contains two or more kinds of monomers as constituent monomers, each of the monomers having a different total number of carbon atoms in $-CH_2-CH_2-[CH(R^4)]_n-CH_3$ in the formula (2), and
the total numbers of carbon atoms in $-CH_2-CH_2-[CH(R^4)]_n-CH_3$ in the two or more kinds of monomers are an average of 16 to 18 per one molecule.

**7.** The viscosity index improver according to any one of claims 2 to 6,
wherein said copolymer (A) further contains a monomer (a2), as a constituent monomer, represented by the formula (3) in which $R^2$ in said formula (1) is a C1-C3 alkyl group, $R^3$ is hydrogen atom, and the total number of carbon atoms in $-CH_2-C(R^2)(R^3)-[CH(R^4)]_n-CH_3$ is 14 to 40;

[Chem. 3]

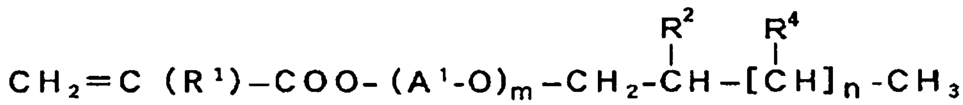

(3)

(wherein
$R^1$ is hydrogen atom or methyl group;
$R^2$ is a C1-C3 alkyl group;
n atoms of $R^4$ each independently is hydrogen atom or a C1-C3 alkyl group;
the total number of carbon atoms in $-CH_2-CH(R^2)-[CH(R^4)]_n-CH_3$ is 14 to 40;
n is an integer of 4 to 36;
$A^1$ is a C2-C4 alkylene group; and
m is 0 or an integer of 1 to 20).

**8.** The viscosity index improver according to claim 1,
wherein said monomer (a) is a monomer (a3) represented by the formula (4), in which $R^3$ in the formula (1) is $-CH_2-CH(R^5)-[CH(R^6)]_k-CH_3$;

[Chem. 4]

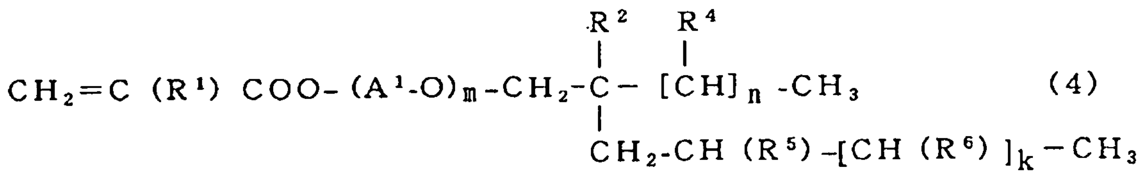

(4)

(wherein
$R^1$ is hydrogen atom or methyl group;
in the formula (4), the total number of carbon atoms in the alkyl group moiety represented by the following formula (5) is 28 to 80);

[Chem. 5]

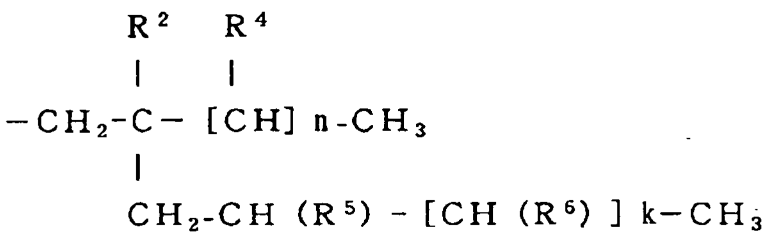

(5)

(wherein
$R^2$ and $R^5$ each independently is hydrogen atom or a C1-C3 alkyl group;
n atoms of $R^4$ and k atoms of $R^6$ each independently is hydrogen atom or a C1-C3 alkyl group;
when $R^2$ is hydrogen atom, at least one of n atoms of $R^4$ is a C1-C3 alkyl group;
when $R^5$ is hydrogen atom, at least one of k atoms of $R^6$ is a C1-C3 alkyl group;
n and k each is an integer of 4 to 36;
$A^1$ is a C2-C4 alkylene group; and
m is 0 or an integer of 1 to 20).

**9.** The viscosity index improver according to claim 1,
wherein said monomer (a) is a monomer (a4) in which $R^3$ in the formula (1) is a C10-C18 straight-chain alkyl group.

**10.** The viscosity index improver according to claim 7,
wherein a molar ratio (a1)/(a2) of the constituent monomers in said copolymer (A) is (70/30) to (90/10).

**11.** The viscosity index improver according to claim 7 or 8,
wherein said copolymer (A) contains the following monomers (i) to (iv) as constituent monomers, and contents of respective monomers based on the total weight of (i) to (iv) are the following amounts;

(i): (a1)
(ii): (a2) [sum of (a1) and (a2) is 3 to 95% by weight)
(iii) : 4.9 to 70% by weight of alkyl (meth) acrylate (b1) having a C1-C4 alkyl group, and
(iv) : 0.1 to 90% by weight of at least one kind of monomer (b2) selected from (meth) acrylates having a C8-C17 alkyl group other than (a1) and (a2) and (meth)acrylates having a C18-C24 straight-chain alkyl group.

**12.** A viscosity index improver composition containing:

the viscosity index improver according to any one of claims 1 to 11; and
a diluting solvent (D),

wherein the content of the viscosity index improver is 10 to 90% by weight and the content of the diluting solvent (D) is 10 to 90% by weight based on the total weight of the viscosity index improver and the diluting solvent (D).

**13.** The viscosity index improver composition according to claim 12,
wherein the diluting solvent (D) is a solvent having a flash point of 120°C or more.

**14.** A lubricant composition containing:

the viscosity index improver according to any one of claims 1 to 11; and
a base oil,

wherein said base oil has a kinetic viscosity at 100°C of 2 to 10 $mm^2/s$ and a flash point of 160°C or more, and said lubricant composition contains 0.1 to 30% by weight of said copolymer (A) based on a weight of the lubricant composition.

**15.** The lubricant composition according to claim 14, further containing:

at least one kind selected from the group consisting of organic phosphorus compounds (P) represented by the following formulas (6) to (9):

$O=P(OR^7)_a(OH)_{3-a}$ (6)

$O=P(OR^8)_b(OH)_{3-b} \cdot NH_cR^9{}_{3-c}$ (7)

$P(OR^{10})_a(OH)_{3-a}$ (8)

$P(OR^{11})_b(OH)_{3-b} \cdot NH_cR^{12}{}_{3-c}$ (9)

(wherein
a is an integer of 1 to 3;
b and c each is an integer of 1 or 2;
$R^7$ to $R^{12}$ each independently is a C4-C24 alkyl group or alkenyl group, or a C6-C24 aryl group or alkyl substituted aryl group; and
$R^7$ to $R^{12}$ is the same or different from each other).

**16.** The lubricant composition according to claim 14 or 15, further containing:

at least one copolymer selected from the group consisting of a copolymer (B1) and a copolymer (B2),

wherein
said copolymer (B1) include different two or more kinds of alkyl (meth)acrylates (b2'),
the average number of carbon atoms is 12.0 to 13.0 per one molecule of an alkyl group in said two or more kinds of alkyl (meth)acrylates (b2');
said copolymers (B2) include two or more kinds of alkyl (meth)acrylates (b2''),
the average number of carbon atoms is 13.1 to 15.0 per one molecule of an alkyl group in said two or more kinds of alkyl (meth)acrylates (b2''); and
said alkyl (meth) acrylate (b2') and alkyl (meth) acrylate (b2'') each is (meth)acrylate having a branched C8-C17 alkyl group other than (a) or (meth) acrylate having a straight-chain C8-C24 alkyl group.

**17.** A monomer composition containing two or more kinds selected from monomers (a) represented by the formula (1):

[Chem. 6]

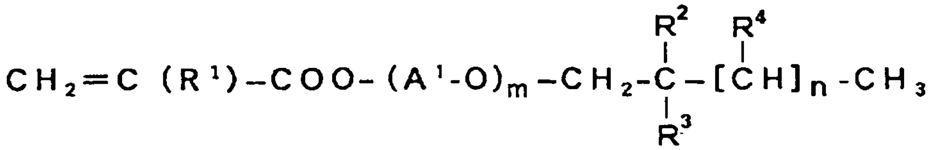

(1)

$R^1$ is hydrogen atom or methyl group;
$R^2$ is hydrogen atom or a C1-C3 alkyl group;
$R^3$ is hydrogen atom or a C8-C40 alkyl group;
n atoms of $R^4$ each independently is hydrogen atom or a C1-C3 alkyl group;
the total number of carbon atoms in $-CH_2-C(R^2)(R^3)-[CH(R^4)]_n-CH_3$ is 14 to 80;
n is an integer of 4 to 36;
at least one of $R^2$ and n atoms of $R^4$ is a C1-C3 alkyl group; $A^1$ is a C2-C4 alkylene group; and
m is 0 or an integer of 1 to 20).

**18.** The monomer composition (x) according to claim 17,
wherein said monomer composition contains a monomer (x1) in which both of $R^2$ and $R^3$ in the formula (1) are hydrogen atom and a monomer (x2) in which $R^2$ is methyl group and $R^3$ is hydrogen atom;
n in (x1) and (x2) each is an integer of 6 to 14;
the total number of carbon atoms in $-CH_2-C(R^2)(R^3)-[CH(R_4)]_n-CH_3$ is 16 to 18; and
the content of (X1) is 70 to 90% by mole and the content of (X2) is 10 to 30% by mole based on the total number

of moles of (x1) and (x2).

**19.** The monomer composition (z) according to claim 17,
wherein $R^3$ in the formula (1) is $-CH_2-CH(R^5)-[CH(R^6)]_k-CH_3$ in said monomer composition;
said monomer composition contains a monomer (z1) in which both of $R^2$ and $R^5$ are hydrogen atom, a monomer (z2) in which both of $R^2$ and $R^5$ are methyl group, and a monomer (z3) in which either one of $R^2$ and $R^5$ is hydrogen atom and the other is methyl group;
n and k in (z1) to (z3) each is an integer of 4 to 36;
the total number of carbon atoms in $-CH_2-C(R^2)(R^3)-[CH(R^4)]_n-CH_3$ is 28 to 80; and
the content of (z1) is 49 to 82% by mole, the content of (z2) is 0 to 9% by mole, and the content of (z3) is 18 to 42% by mole based on the total number of moles of (z1) to (z3).

**20.** The monomer composition according to any one of claims 17 to 19,
wherein m in the formula (1) is 0.

**21.** A polymer having a weight average molecular weight of 5,000 to 2,000,000 obtained by polymerizing the monomer composition according to any one of claims 17 to 20.

Fig. 1

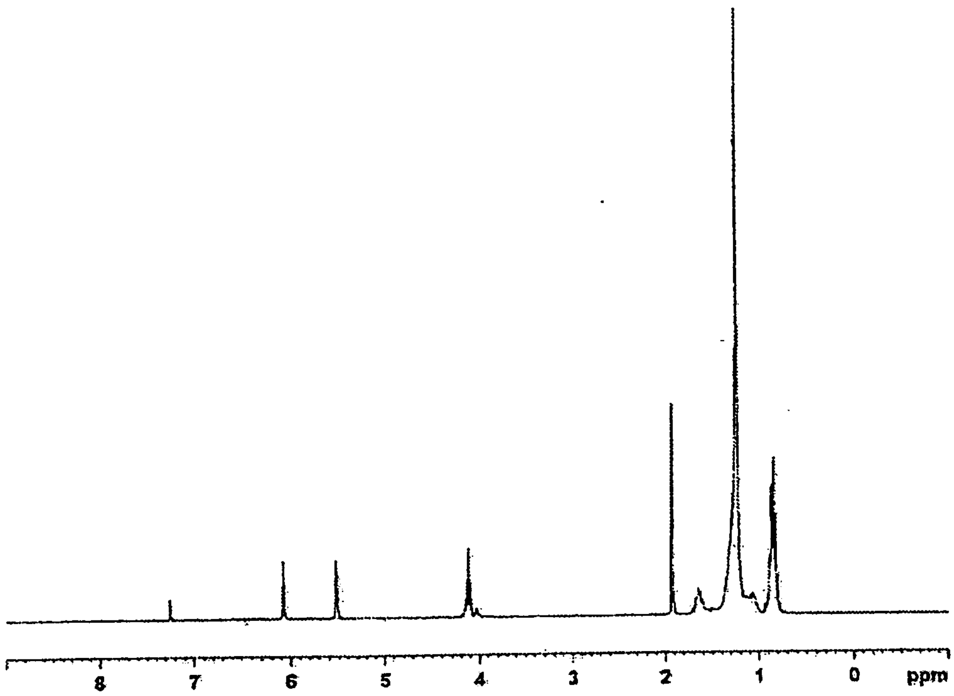


Fig. 2

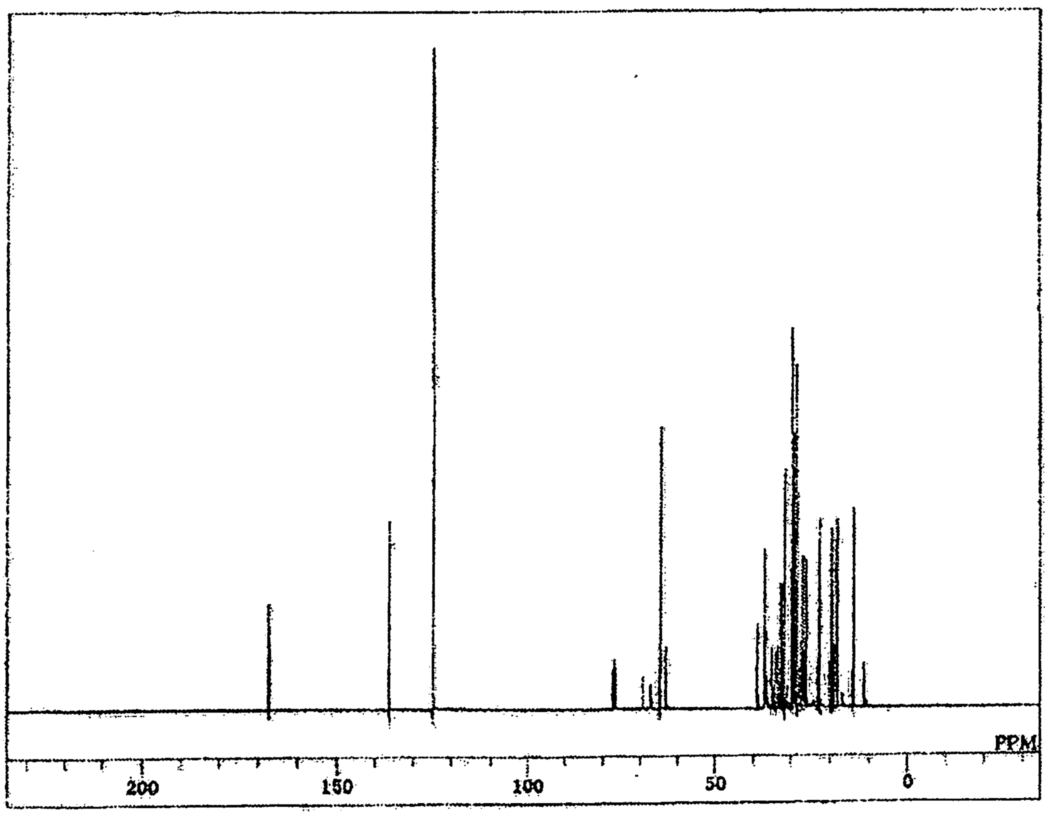

Fig. 3

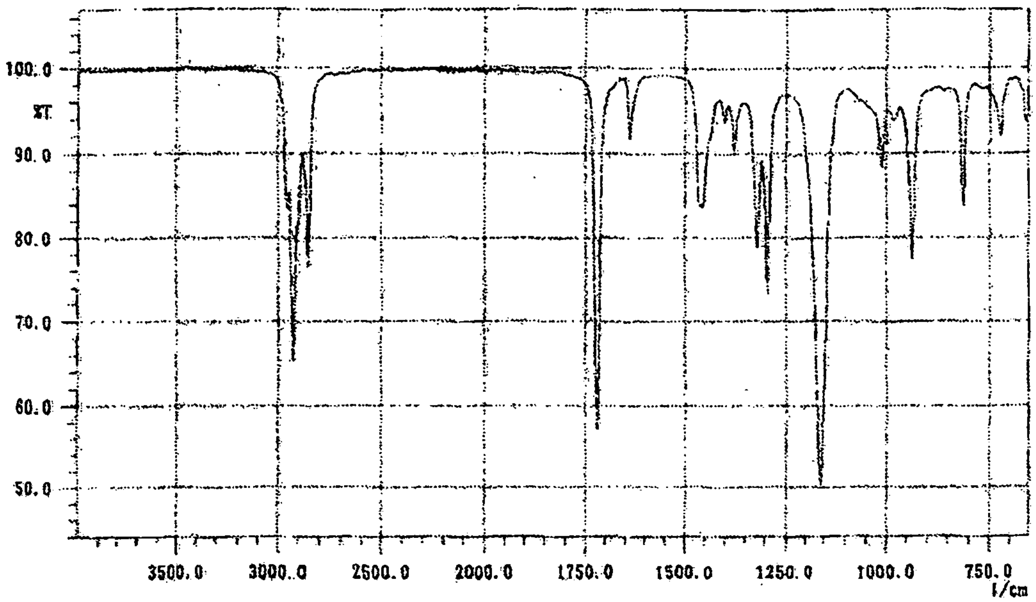
100.0
%T
90.0
80.0
70.0
60.0
50.0
3500.0
3000.0
2500.0
2000.0
1750.0
1500.0
1250.0
1000.0
750.0
1/cm

Fig. 4

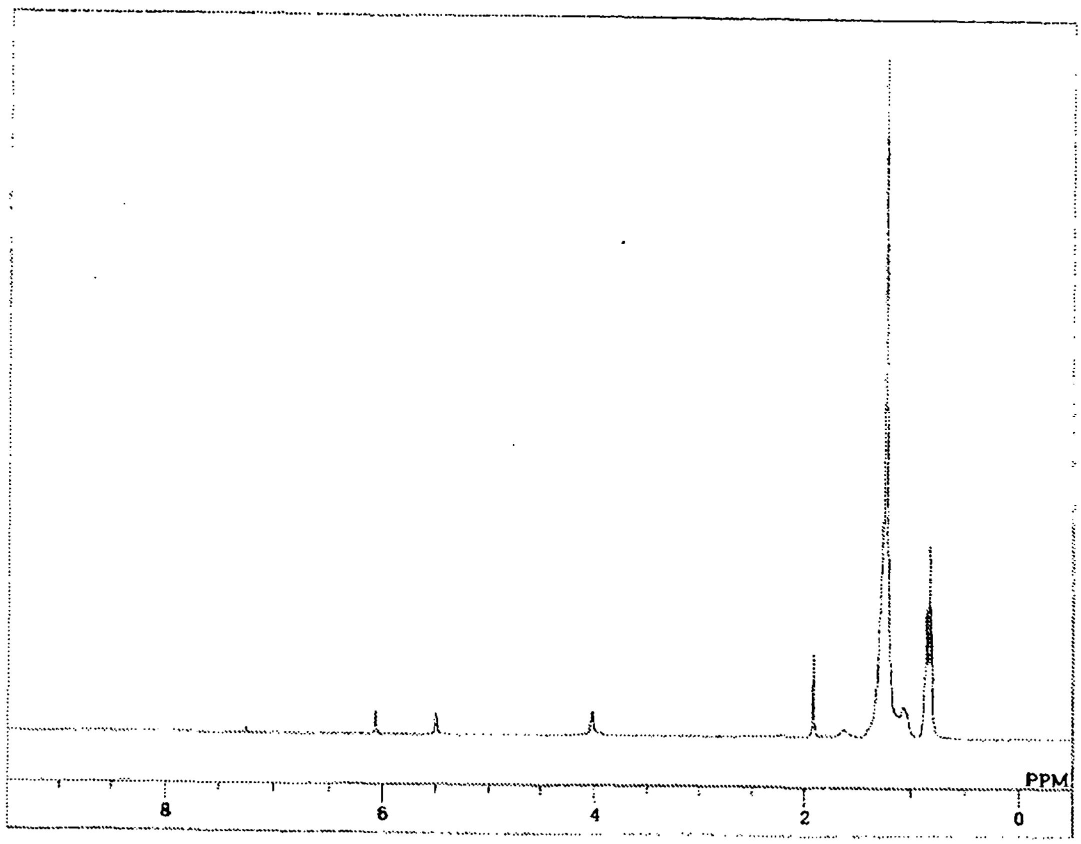
PPM
8
6
4
2
0

Fig. 5

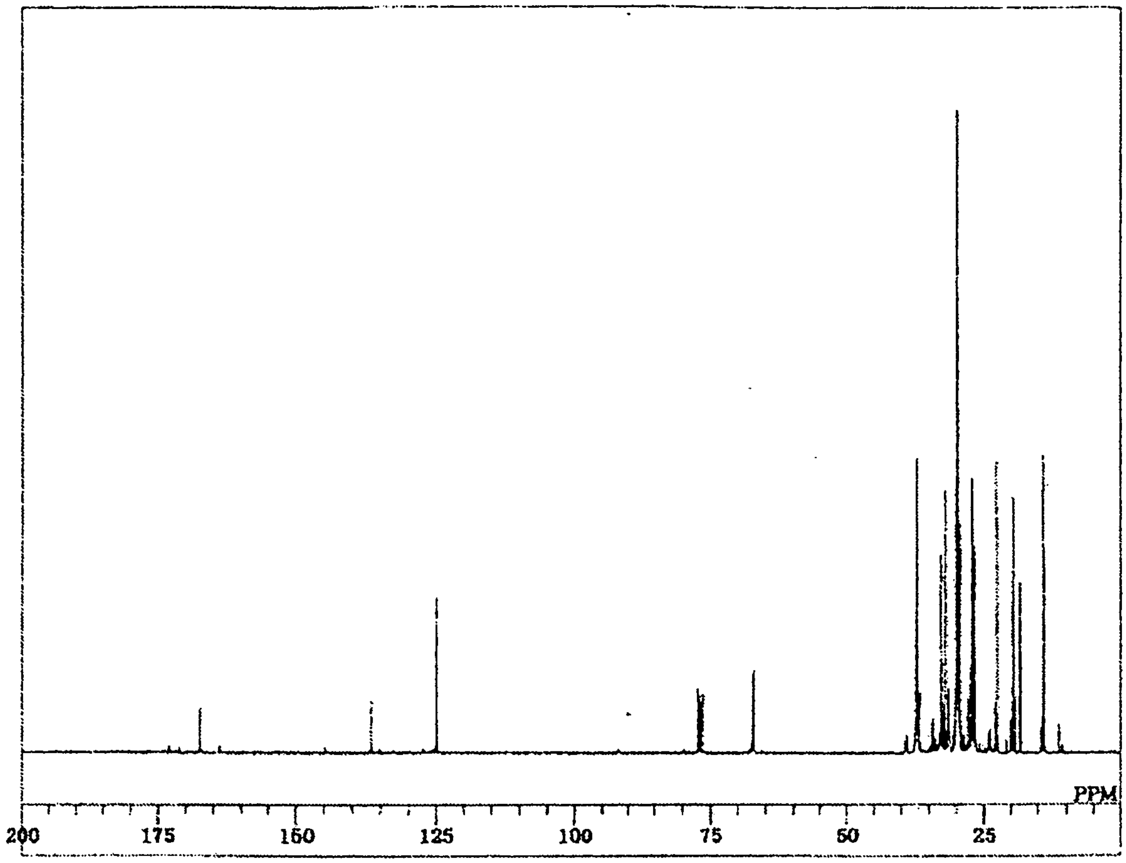
PPM
200
175
150
125
100
75
50
25

Fig. 6

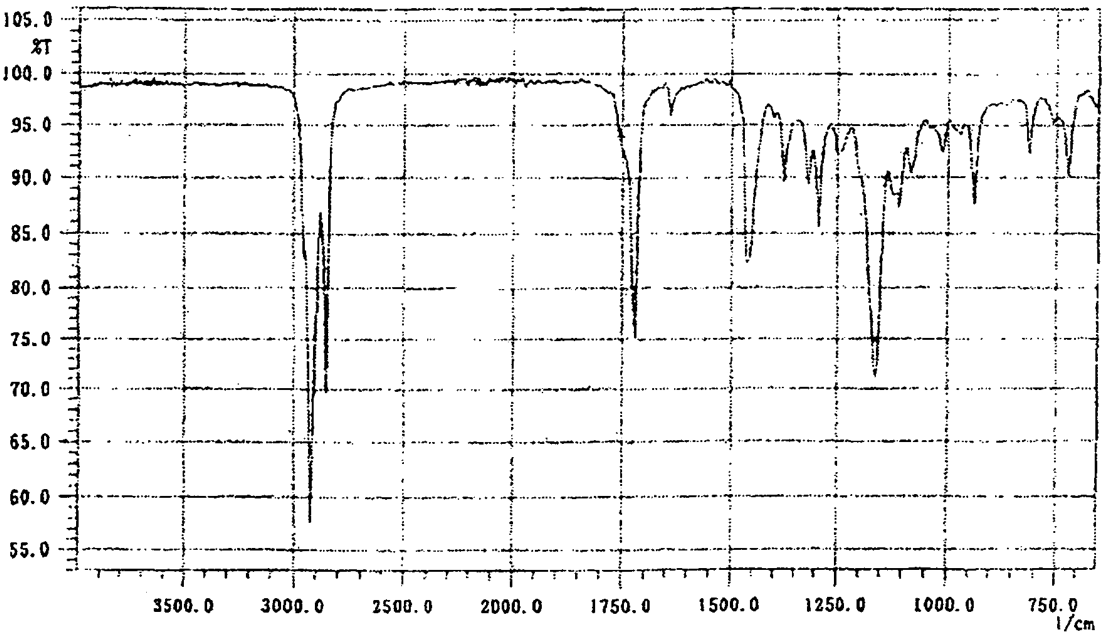
105.0
%T
100.0
95.0
90.0
85.0
80.0
75.0
70.0
65.0
60.0
55.0
3500.0
3000.0
2500.0
2000.0
1750.0
1500.0
1250.0
1000.0
750.0
1/cm

**INTERNATIONAL SEARCH REPORT**

International application No.
PCT/JP2007/056453

A. CLASSIFICATION OF SUBJECT MATTER
*C09K3/00*(2006.01)i, *C08F220/26*(2006.01)i, *C08F290/06*(2006.01)i, *C08F299/00*(2006.01)i, *C10M101/02*(2006.01)i, *C10M137/04*(2006.01)i, *C10M137/08*(2006.01)i, *C10M145/14*(2006.01)i, *C10M169/04*(2006.01)i,

According to International Patent Classification (IPC) or to both national classification and IPC

B. FIELDS SEARCHED

Minimum documentation searched (classification system followed by classification symbols)
C09K3/00, C08F220/26, C08F290/06, C08F299/00, C10M101/02, C10M137/04, C10M137/08, C10M145/14, C10M169/04, C10N20/00, C10N20/02, C10N20/04, C10N30/02, C10N30/08, C10N40/04, C10N40/06, C10N40/08, C10N40/25

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)
CAplus(STN), REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br><br>A | JP 2003-147332 A (Sanyo Chemical Industries, Ltd.),<br>21 May, 2003 (21.05.03),<br>Claims 1 to 9; Par. Nos. [0046] to [0059]<br>(Family: none) | 1,12-17,<br>20-21<br>2-11,18-19 |
| A | GB 852332 A (Ian Robert Henry Crail),<br>26 October, 1960 (26.10.60),<br>(Family: none) | 1-21 |

☐ Further documents are listed in the continuation of Box C.　　☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>29 June, 2007 (29.06.07) | Date of mailing of the international search report<br>10 July, 2007 (10.07.07) |
| Name and mailing address of the ISA/<br>Japanese Patent Office<br><br>Facsimile No. | Authorized officer<br><br><br>Telephone No. |

Form PCT/ISA/210 (second sheet) (April 2005)

**INTERNATIONAL SEARCH REPORT**

International application No.
PCT/JP2007/056453

Continuation of A. CLASSIFICATION OF SUBJECT MATTER
(International Patent Classification (IPC))

*C10N20/00*(2006.01)n, *C10N20/02*(2006.01)n, *C10N20/04*(2006.01)n, *C10N30/02*(2006.01)n, *C10N30/08*(2006.01)n, *C10N40/04*(2006.01)n, *C10N40/06*(2006.01)n, *C10N40/08*(2006.01)n, *C10N40/25*(2006.01)n

(According to International Patent Classification (IPC) or to both national classification and IPC)

Form PCT/ISA/210 (extra sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP HEI748421 B
- JP HEI762372 B
- JP 2732187 B
- JP 2941392 B
- JP 2002302687 A
- JP 2004124080 A
- JP 2005187736 A
- US 5384336 A
- US 6740621 B
- JP 2006509899 A
- JP HEI922742 B
- JP 2669553 B


### Non-patent literature cited in the description


- **FEDORS.** *Polym. Eng. Sci.,* 1974, vol. 14 (2), 152
- **TAKEHIKO FUJIMOTO.** Shin. Kaimenkasseizai Nyumon. Sanyo Chemical Industries, Ltd, 197-201
- *Ind. Eng. Chem.,* 1961, vol. 53, 33
- *Journal of Molecular Catalysis,* 1985, vol. 33